(19) Europäisches Patentamt / European Patent Office / Office européen des brevets

(11) **EP 1 706 306 B1**

(12) **EUROPEAN PATENT SPECIFICATION**

(45) Date of publication and mention
of the grant of the patent:
**05.10.2011 Bulletin 2011/40**

(21) Application number: **05700560.5**

(22) Date of filing: **11.01.2005**

(51) Int Cl.:
***B62D 1/12*** *(2006.01)*

(86) International application number:
**PCT/DK2005/000010**

(87) International publication number:
**WO 2005/068276 (28.07.2005 Gazette 2005/30)**

(54) **A MANUALLY ACTUABLE STEERING DEVICE**

VON HAND BETÄTIGBARE LENKVORRICHTUNG

DISPOSITIF DE DIRECTION   COMMANDE MANUELLE

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **13.01.2004 DK 200400032**

(43) Date of publication of application:
**04.10.2006 Bulletin 2006/40**

(73) Proprietor: **Omni-Drive AG
4107 Ettingen (CH)**

(72) Inventors:
• **KOFOED, Henrik
DK-3060 Espergaerde (DK)**
• **BECH, Ilsted, Mogens
DK-3460 Birkerod (DK)**

(74) Representative: **Plougmann & Vingtoft A/S
Sundkrogsgade 9
P.O. Box 831
2100 Copenhagen Ø (DK)**

(56) References cited:
**EP-A- 0 933 283      EP-A- 1 350 706
WO-A-2004/000700   DE-A1- 19 625 500**

**Description**

FIELD OF THE INVENTION

The present invention relates to an actuating device for manually actuating driving and steering means for a wheeled, power driven object or vehicle, especially an object or a vehicle provided with wheels of the omni-directional type, such as described in US-B-6,474,434 and international patent application PCT/DK03/00623 and DE 196 25500 A1.

DESCRIPTION OF PRIOR ART

Known actuating devices of this kind are usually in the form of a joy stick. The proper use of such joy stick requires certain training, and is quite inadequate if the operator is not actually situated on the driven vehicle.
US-A-6,276,471 discloses a vehicle comprising a pair of motor driven wheels and at least one caster wheel. The power supply to the electric motors is controlled by a programmable control unit. This control unit includes a plurality of sensors arranged in each of a pair of handles or in a U-shaped stirrup for sensing a manual displacement force or a steering force applied thereto. Because it is more or less incidental which fraction of a manual driving force applied to the handles or stirrup is transferred to the respective sensors, this structure does not allow a sensitive control of the driving motors.
The problem to be solved is to provide a sensitive manual actuating device, which without preceding training may be operated by persons, who are used to push or drag a wheeled vehicle by manual forces.

SUMMARY OF THE INVENTION

This problem is solved by the actuating device according to the invention, said actuating device comprising a base member, an actuating member having gripping means and being supported by the base member so as to be displaceable thereon (freely within certain limits along at least one plane, at least first and second force transducers, the first transducer being arranged to receive a force component manually applied to the actuating member in a predetermined first direction only, along said plane, and the second force transducer being arranged to receive a force component manually applied to the actuating member in a predetermined second direction only, transversely to the first direction along said plane, each of said first and second force transducers being adapted to generate an output signal to the steering system responsive to the strength of the force component received.
This means that the arrangement may be such that when the gripping means, such as handles or the like, are gripped by an operator and pushed or pulled in the said first direction as if the vehicle should be moved by the manual forces in that direction, the first transducer generates an output signal to the steering means causing the power drive of the vehicle to move the vehicle in said first direction with a speed being dependent on the force applied to the gripping means including a possible time dependency. Similarly, if the operator applies a manual force to the gripping means in said second direction, the vehicle is moved in said second direction with a speed dependent on the force applied to the gripping means, and if the force applied to the gripping means by the operator has components in said first and second directions, respectively, the vehicle will be driven in the general direction of the force applied. In principle, the actuating member may be displaceable along two crossing planes. In the presently preferred embodiment, however, only one displacement plane is used.
As indicated above, the gripping means preferably comprises a pair of mutually spaced gripping handles, which are fixedly mounted on the actuating member and symmetrically arranged in relation to said first predetermined direction. Furthermore, said first force transducer and a similar third force transducer, which is arranged like the first force transducer to receive a force component manually applied to the actuating member in said predetermined first direction only, are preferably arranged symmetrically in relation to the said first predetermined direction.
In case the gripping means comprise a pair of mutually spaced handles or grips, the operator may turn the vehicle by pushing one of the handles and pulling the other.
Any non-parallel set of predetermined directions may be chosen as the said first and second directions, and the manual force applied to the actuating member may then be decomposed in force components in these directions. The said first and second directions may in fact define any acute angle there between. In a preferred embodiment, however, said first and second directions extend at mutually right angles. Thus, said first predetermined direction preferably extends in the longitudinal direction or the normal direction of travel of the vehicle.
In the preferred embodiment each force transducer is fixedly mounted in relation to the base member, and each force transducer may have a force transmitting member extending into and engaging with the walls of an associated recess or track in the actuating member. Such recess or track may then be shaped such that only a force component in the said predetermined direction may be transmitted from the actuating member to the force transducer via said transmitting member.

The force transducers may be of any suitable type, which is able to perform the function described above. In the preferred embodiment, however, the force transducers comprise strain gauges, which are relatively cheap and simple to install in the actuating device. Thus, as an example, each force transducer may comprise a cantilever beam having strain gauges mounted thereon, and the force component from the actuating member may then be applied to the free end of the beam so as to generate bending stresses therein.

It is important that the frictional forces counteracting movement or displacing the actuating member in relation to the base member are kept suitably low and uniform. This may, for example, be obtained when the actuating member is freely floating on a film or layer of liquid or paste arranged between the actuating member and the base member.

It is of the utmost importance that the actuating device is stable in operation and that shocks and vibrations transferred from the vehicle to the actuating device do not adversely influence the operation of the actuating device. This may be obtained by suitable damping means for damping or prevention of vibration movements of the actuating member in relation to the base member. Such damping may be obtained in a simple manner by selecting said liquid film or layer of a liquid with a suitable viscosity, such as a layer of viscous oil or grease. Preferably, the liquid film or layer is a layer of damping grease.

The actuating device according to the invention may further comprise an electronic circuit for receiving the output signals from the force transducers and for processing these signals prior to transmitting them to the driving and steering system of the vehicle. As indicated above, this may be done so as to obtain substantially the same movement of the vehicle as if it had been manually driven by the forces applied to the gripping means, but at an intensified scale.

Another aspect the present invention relates to a method for manually actuating driving and steering means for a wheeled, power driven object or vehicle, said method comprising applying a manual force to an actuating member, decomposing the manual force into at least two components extending in mutually intersecting, predetermined directions, applying each of said force components to a respective transducer, and transmitting from each of said transducers to the steering system an output signal, which is responsive to the strength of the force component received by the transducer relating to the respective direction.

A further aspect of the present invention provides a drive wheel system or a drive wheel set for supporting and driving an object, said wheel system comprising: at least two separate wheeled units or bogies to be mounted at selected locations on the object to support the same, each unit including a frame, at least one wheel member rotatably mounted in relation to the frame, driving means for rotating the wheel member(s) in relation to the frame and steering means for moving the wheel member(s) in desired directions in relation to the frame, electronic control means for controlling the function of the driving and steering means of said wheeled units or bogies and including a pre-programmed bogie control device at each said wheeled units or bogies, signal transmitting means, and a pre-programmed central control unit for outputting command signals to each of the pre-programmed bogie control devices via the signal transmitting means in response to input command signals received, and an actuating device as described above, the output signals generated by the transducers thereof being transmitted to the electronic control means.

Thus, the present invention provides a modular kit, which may comprise driving wheeled units or bogies, power supply means, such as a power pack, and electronic control means, and which is adapted to be mounted on a broad variety of wheeled vehicles, such as wheelchairs, pallet movers, hospital beds or even industrial robots.

The division of the electronic control means into a pre-programmed central or common control unit or microcomputer, which is common to all of the wheeled units or bogies, and pre-programmed bogie control devices or micro-computers arranged at a wheeled unit each involves important advantages. Thus, data processing requiring high data transmission rates may take place inside the central control unit and the bogie control devices, respectively, while the data transmission rate between the central unit and the various bogie control devices via the data transmission means may be kept acceptably low.

By arranging the drive wheel system such that only raw power and high level, low rate data transmission to each single wheeled unit from a power source and from the central control unit, respectively, are required, true modularity and operational safety may be obtained. Furthermore, the central control unit may comprise first programming means for inputting information about the mutual positions of the wheeled units or bogies on said object and/or each bogie control device may comprise second programming means for inputting information about the orientation of the associated wheeled unit in relation to a selected common axis when mounted on said object. The first and second programming means may, for example, comprise simple digital switches, so that persons without expert knowledge may install and program the drive wheel system according to the invention on a selected object based on simple written or oral instructions.

The invention renders it possible to use a standard drive wheel system for rendering any object, such as a load carrying platform or a vehicle, including wheeled hospital beds, self-propelling and extremely manoeuvrable. Thus, the object may be provided with two or more wheeled units or bogies, and the operation of these units are co-ordinated by the central control unit, regard being paid to the individual and relative positions of the wheeled units or bogies on the object.

As indicated above, the system according to the invention allows vehicle manufacturers with no or little understanding of power driven omni directional wheels, engines, electronics, software and drive geometry to render their vehicles omni directional, simply by mounting the modular system onto the vehicle. Furthermore, such a system also allows owners of existing manually driven vehicles to render their vehicles power driven and omni directional in a very simple manner.

The drive wheel system according to the invention comprises a command or actuating device for inputting command signals to the central control unit, whereby an operator can control the movement of the wheeled object or vehicle. The command device may comprise a further manually operable steering device, such as a joystick, a steering wheel and/or one or more steering levers, and switching means may allow optional switching between the actuating device and any other type of steering device.

The central electronic control unit may be handheld, for example together with the actuating device or steering device. Preferably, however, the control unit and the actuating device are mounted on the object or vehicle. Alternatively or additionally, the command or actuating device may comprise a wireless remote control, such as e-mail or mobile phone. Such remote control may also be used to monitor, diagnose, or re-program individual modules or the total drive wheel system.

Alternatively or additionally, the electronic control unit may be pre-programmed so that the wheeled object may be driven along a selected path in accordance with such preselected program so that no manual steering is necessary.

In order to obtain correct steering movements of the wheel members the central electronic control unit is preferably programmed to ensure that the steering means are moving all wheel members of the wheeled units or bogies mounted on the said object in such a manner that at any time during driving, all wheel members are either moving along substantially parallel paths or along concentric arcs of circles and with speeds matching the individual paths.

In principle, the signal transmitting means could merely be in the form of wires or electrical conductors. However, in order to prevent possible ground loops passing unintended loop currents, which might corrupt the proper functioning of the total system, the signal transmitting means preferably comprise a galvanic isolating device. Such device may, for example comprise an optocoupler. An optocoupler is a device or chip comprising a light source (typically an LED) emitting light to a photo sensor when activated. The photo sensor may be a photo diode or a transistor, which is activated when hit by light from the light source. Because the electrical connections of the light source and the photo sensor may be widely separated on the chip, galvanic separation between these two components to a high voltage level may be obtained.

Preferably, the central control unit comprises means for transforming output command signals to be transmitted to the bogie control devices at the wheeled units or bogies into serial digital strings, whereby information may be transferred to the bogie control devices, for example via optocouplers, with high efficiency.

From the above it is clear, that an optocoupler can transfer information encoded as a digital serial string with high efficiency. At the same time, the device ensures complete galvanic separation of the communicating circuits on either side of the optocoupler, thereby preventing possible ground loops passing unintended loop currents, which might otherwise corrupt the proper functioning of the total system. This is an important aspect in a system intended for high reliability while maintaining freedom of location of the bogie modules in an overall assembly design, particularly in the case of a user without specialized electronic knowledge.

It should be understood that according to the present invention the electronics of the electronic control means could advantageously be divided into the central control unit on one hand and each of the bogie control devices on the other hand so as to minimize data transmission via the signal transmitting means.

In order to make use of an isolating device that is specifically capable of mono-directional or bi-directional transfer of digital data on serial format, it is fundamentally necessary, that data handling capability is to be present on either side of such isolating device, with suitable programs encoded to transform commands of whatever form into serial digital strings and visa versa.

The microcomputer(s) in the central control unit is/are arranged to transform joystick or similar manual inputs into data strings prescribing bogie movements in terms of wheel speed and wheel direction as requested to achieve the overall response of the total mobile unit. The command bandwidth for communication at this level is not very demanding and consequently the required data rate is not very high.

The microcomputer(s) in each wheeled bogie is/are arranged to transform the received data strings, prescribing overall bogie movement, into the closed loop control commands handling very precisely wheel direction and wheel rotation movements and the mutual relations between these, while at the same time being exposed to external disturbances in the form of sudden transient load variations etc. to accurately achieve the prescribed bogie movement. This involves rather high data rates, which can thus be kept internal, locally in each bogie control device and need not be communicated to the overall central control unit.

The driving and steering means of the wheeled units or bogies may comprise motors selected from the group consisting of electric motors, hydraulic motors, pneumatic motors, steam engines, thermodynamic engines, and internal combustion engines.

In principle, the wheeled units or bogies of the drive wheel system according to the invention may be different in various aspects. Preferably, however, the wheeled units or bogies of the system are substantially identical. Apart from the electronic bogie control device the wheeled unit may be of any omni directional type, such as those disclosed in the above patent publications. Preferably, however, each wheel member of the wheeled units or bogies is of the type comprising a support member, a wheel element and a drive shaft, the drive shaft having a drive means engaging a drive surface on the wheel element to rotatably drive the wheel element relative to the support member, the drive shaft having a longitudinal axis and the engagement of the drive means and drive surface defining in vertical cross-section a line of engagement that is at an acute angle to the longitudinal axis, the wheel element having a surface contacting portion extending about its periphery and positioned such that it is intersected by the line of engagement substantially at where it contacts a supporting surface.

When a pair of identical driving wheels is moving along parallel paths, their respective speeds may differ slightly even though they are rotated synchronously, because the effective diameters of the wheels will differ a little due to manufacturing tolerances and/or load conditions. Thus, after a short driving distance the two wheels may build up an internal stress force in their driving structures because the two motor armatures of the wheel drives will draw effectively opposing armature currents on top of the cooperating currents used for driving.

This means a futile spending of battery power, which only generates heat in the motors and degrade the overall capability of the diving system.

In order to remedy this deficiency, the two motor armature currents are preferably continuously monitored, and in case conflicting values are observed, the control software contains a routine, which will modify the commanded speed of one or both of the two wheels in a way so as to ease out the observed stress situation.

This strategy is here described in relation to the mutual operation of just two wheels, but is not limited to this. The principle applies equally to clusters of wheels, where such conflicts may arise in several combinations and can be dealt with in accordance with the same principle.

According to a still further aspect, the present invention provides a method of rendering an object self-propelling by means of a drive wheel system of the type described above, said method comprising: mounting at least two of said wheeled units or bogies on the object at selected locations thereof and with selected orientations in relation to a certain direction, programming said first programming means by inputting information about the mutual positions of the wheeled units or bogies on said object, programming said second programming means by inputting information about the orientation of the associated wheeled unit in relation to a selected direction, and inputting command signals to the central control unit by means of the command or actuating device so as to move the vehicle along a desired path.

The wheeled units or bogies may be installed at any selected suitable location, and information to be encoded into the central control unit about the mutual positions of the wheeled units or bogies may be based on the positions in relation to an actual or imaginary co-ordinate system fixed with respect to the object on which the system is to be installed. In such case the said selected direction may be one of the axes of the co-ordinate system.

The electronic control means are preferably pre-programmed to ensure that the steering means are moving all wheel members of the wheeled units or bogies mounted on the said object such that any time during driving, all wheel members are either moving along substantially parallel lines or substantially concentric arcs of circles and with mutually matching velocities.

The object to be rendered self-propelled may be a manually driven vehicle having a plurality of supporting wheels, at least some of these wheels being replaced so as to have the vehicle supported by at least two of said wheeled units or bogies and freely swivelling wheels or casters, only.

Apart from transmission of raw power, the wheel system according to the present invention only requires high level, low rate data transmission from the central control unit to the bogie control devices at the respective wheeled bogies, whereby true modularity and operational safety is obtained in a manner, which does not require specially trained persons.

BRIEF DESCRIPTION OF THE DRAWINGS

The invention will now be further described with reference to the drawings, wherein

Fig. 1 is a perspective view of an embodiment of the actuating device according to the invention,

Fig. 2 is a side view of the actuating device shown in Fig. 1,

Fig. 3 diagrammatically illustrates an embodiment of a drive wheel system,

Fig. 4 is a sectional view of a preferred drive wheel to be used in connection with the present invention,

Fig. 5 - 10 diagrammatically illustrate an embodiment of the drive wheel system according to the invention and various operational steps,

Fig. 11 illustrates a pallet mover, on which the modular drive wheel system shown in Figs. 3 - 10 has been mounted,

Fig. 12 illustrates a hospital bed with the drive wheel system shown in Figs. 3 - 10 mounted thereon.

Fig. 13 is a simplified representation of a chassis provided with a drive wheel system according to the invention, for example a person hoist,

Figs. 14 and 15 are a representation of the motion geometry of the wheeled chassis shown in Fig. 13,

Fig. 16 is a block diagram illustrating an embodiment of the central control unit of the wheel drive system and the actuating device for manually controlling the operation of the system, and

Fig. 17 is a block diagram showing an embodiment of an electronic bogie control device arranged at each of the bogie modules or wheeled units.

DESCRIPTION OF PREFERRED EMBODIMENTS

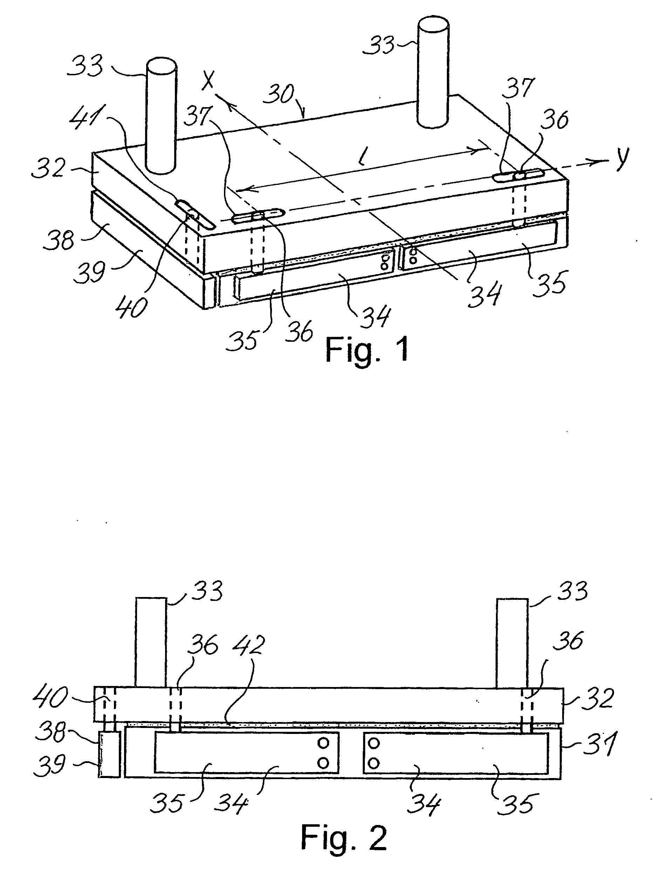

The command or actuating device 30 shown in Figs. 1 and 2 comprises a base plate 31, which may be fixedly mounted on a wheeled vehicle, such as any of the following types: Wheelchairs, patient hoists, shower chairs, commode chairs, transport chairs, walking aids, forklifts, palette movers, work tables, robots, distribution trolleys, mobile work platforms, luggage trolleys, shopping trolleys, hospital beds, hospital cabinets, hospital waste containers, construction vehicles, earth moving vehicles, mining vehicles, and bomb disposal vehicles or any other powered vehicle. An actuating plate or a control plate 32 provided with a pair of upwardly ending, spaced handles 33 is positioned on top of the base plate 31, and the top surface of the base plate 31 and the opposite bottom surface of the actuating plate 32 are complementary shaped and preferably plane or slightly curved.

In the embodiment shown in Figs. 1 and 2 the plates 31 and 32 define a substantially rectangular outline, and a pair of force transducers 34 are mounted on a longer edge surface of the base plate 31. Each force transducer 34 comprises a cantilever beam 35 fastened to the base plate 31 at the middle thereof, and the beams extend in opposite directions towards the opposite free ends of the base plate. A pin 36 is fastened to each cantilever beam 35 at its free end and extends upwardly into a narrow elongated recess or slot 37 formed in the control plate 32 so as to define opposite slot surfaces extending mutually parallel and substantially parallel with the corresponding cantilever beam 35 for engaging the said pin 36. Similarly, a force transducer 38 comprising a cantilever beam 39 is mounted on a shorter edge surface of the base plate extending at right angles to the longer edge surface. A pin 40 is fastened to the free end of the cantilever beam 39 and extends upwardly into a narrow elongated recess or slot 41 formed in the control plate 32 extends at right angles to the slot 37 and also defines opposite slot surfaces extending mutually parallel and substantially parallel with the corresponding cantilever beam 39 for engaging the pin 40.

Each of the force transducers 34 and 38 further comprises a strain gauge incorporated in or fastened to a surface part of the beam. Each of these strain gauges are adapted to generate an output signal in response to bending stresses caused in the corresponding cantilever beam 35, 39. The strain gauges may be electrically connected to an electronic control system as described more in detail below.

A film or layer 42 of a viscous liquid, such as damping grease, is arranged between the bottom surface of the control plate 32 and the top surface of the base plate 31. The handles 33 are preferably arranged symmetrically about a central axis X extending at right angles to the cantilever beams 35. When an operator grips the handles 33 and pushes or pulls the handles and, consequently, the control plate 32 in the direction of the axis X, the pins 36 are displaced in the direction of the axis X, whereby the two cantilever beams 35 are equally bent. This means that the corresponding strain gauge will generate identical output signal responsive to the strength of the force applied to the handles 33 by the operator.

The plates 31 and 32 and the cantilever beams 35 and 39 are preferably made from metal, such as stainless steel or aluminium, but all or some of the parts may alternatively be made from suitable plastic materials.

If the handles 33 are pushed to the right or to the left in the direction of the axis Y extending at right angles to the axis X the control plate 32 and the pin 40 are displaced in the direction of the axis Y, whereby a corresponding bending force is applied to the free end of the cantilever beam 39. Therefore, the strain gauge arranged on the beam 39 will generate an output signal responsive to the strength of the force applied to the handles 33 by the operator. If, however, the operator applies a pushing or pulling force to the handles 33 in any other direction than those of the axes X and Y, all of the transducers 34 and 38 are activated. In fact, the force applied is decomposed into components directed along the axes X and Y, respectively, and corresponding output signals are generated by the strain gauges or the force transducers 34 and 38. If an operator wants to turn a wheeled vehicle controlled by means of the actuating device 30, he or she spontaneously pulls one of the handles 33 and pushes the other, as if the operator would move the vehicle exclusively manually.

In Fig. 1 the length I is the distance between the pins 36 of the transducers 34. As explained above, forces applied to the handles 33 of the control plate 32 relative to the base plate 31 will result in electric output signals from the respective transducers 34, 38, and these signals can be amplified to useful magnitudes by normal, well known means. Amplified electric signals will be obtained from each of the transducers 34, 34 and 38 may be labelled $x_1$, $x_2$ and y, respectively. By combining these signals using normal means, command signals relevant to an omni-directional vehicle can be obtained as follows:

| Longitudinal force command | "X" = $(x_1 + x_2)/2$ | V/N |
|---|---|---|
| Lateral force command | "Y" = y | V/N |
| Torque command | "$\omega$" = $(x_1 - x_2)/l$ | V/Nm |

These commands may then be translated into power driven movements of the omni-directional vehicle by methods described below and in international patent application PCT/DK03/00623.

Consequently, an operator grabbing the handles 33 and applying directional forces thereto, will be able to control the movements of a power driven vehicle as if he/she were moving a similar free wheeling vehicle by grabbing and pushing it directly. Any actual drive resistance due to load on the vehicle will be absorbed and overcome by the power drive of the vehicle, the operator only feeling such apparent inertia or drive resistance as has been laid down in the control program which translates forces applied by the operator into the actual drive motions of the vehicle.

As mentioned above, the control plate 32 is free to glide on top of the base plate 31 and is only restrained in this movement by the elastic reactions of the force transducers. This constitutes a mass-spring entity, which inherently supports a resonance frequency given by the mass of the control plate together with anything fixed onto it in combination with the stiffness of the force transducers, assuming that the mass of the base plate dominates the system. When the base plate 31 is mounted on some structural member of an omni-directional vehicle, there is an appreciable risk, that vibrations transmitted through this structural member may activate vibrations of the control plate 32 relative to the base plate 31 at or near this resonance frequency with the possible result, that sustained oscillations may occur, which would be detrimental to the proper control of the vehicle.

According to the present invention, this problem may be solved by any of or by a combination of the following countermeasures:

- By proper choice of transducer stiffness and control plate mass the natural frequency of resonance is placed so high as to make it unlikely, that such frequencies should successfully be transmitted through the supporting structural member.

- By introduction between base plate and control plate a suitable type of lubricant, giving a purely viscous drag of the right magnitude to render the mass-spring second order system just critically or possibly slightly overcritically damped, the free oscillation will be prevented and any disturbing influence from outside is closed out, still leaving the operators command actions unimpaired down to a very low signal level, permitting very accurate control of the vehicle in a confined environment.

- By arranging for a suitably restricted bandwidth of the electronic amplifier system.

As mentioned above a type of liquid or lubricant, which meets the above requirements, is known as Damping Grease and is generally used in optical equipment.

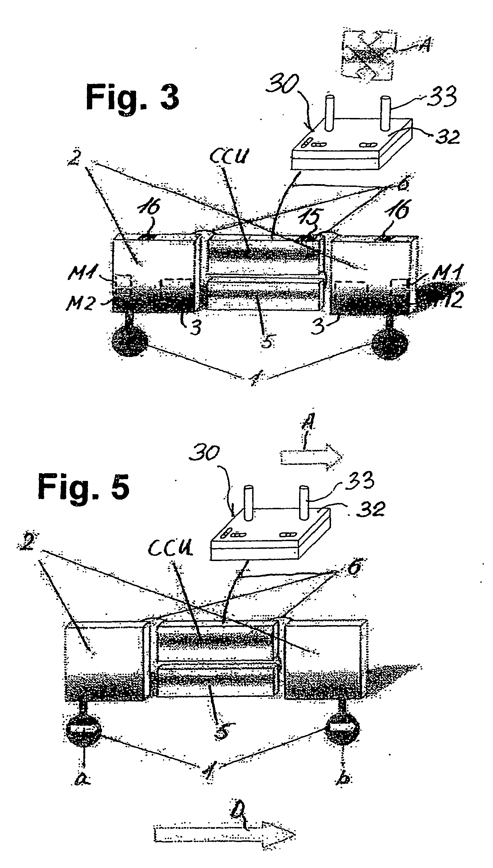

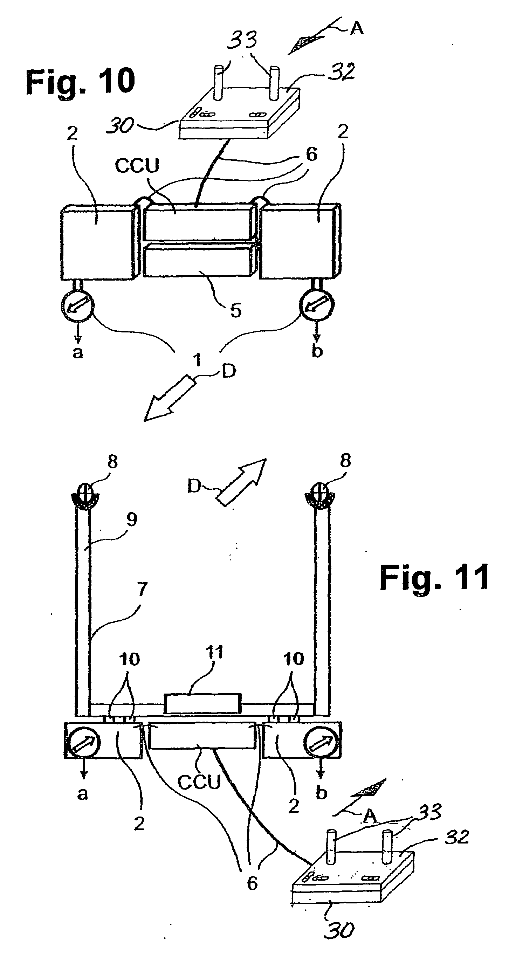

Fig. 3 diagrammatically shows an embodiment of the drive wheel system according to the invention in the form of a modular system or kit. Thus, the system comprises two or more (in Fig. 3 two are shown) wheeled units or bogie modules 2 each having at least one omni-directional drive wheel 1. Each module 2 further includes a directional motor M1 and drive motor M2 diagrammatically indicated by dotted lines, and a power pack module 5 for supplying power to the motors M1 and M2 via connecting cables 6. The operation of the wheeled bogie modules 2 is controlled by means of a central control module or unit CCU or microcomputer provided with suitable software, and by means of a man/machine interface, namely the actuating device 30 (Figs. 1 and 2), from which control input signals may be sent to the central control unit CCU. Control output signals from the central control unit CCU are transferred to a pre-programmed electronic bogie control device 3, such as a microcomputer, at each of the bogie modules 2. The drive wheel system shown in Fig. 3 may be mounted on any given object without wheels, or on a vehicle so as to replace all wheels thereon not being freely swivelling wheels, whereby the vehicle is rendered omni directional. Non-freely swivelling wheels should be replaced either by wheeled bogie modules according to the invention or by free swivelling wheels or caster wheels. The bogie modules 2 can be mounted directly on a vehicle using traditional fastening means and methods, possibly via mounting brackets 10 (Fig. 11).

Depending on the size, nature and weight of the object or vehicle, which one wants to render power driven and omni directional according to the present invention, the size and type of the omni-directional drive wheel(s) of each bogie module may be varied. Similarly, the type and power of the motors or engines chosen for controlling direction and for driving may be varied. Thus, for small or light vehicles electrically powered motors may be ideal, while internal combustion engines, hydraulic or pneumatic engines might be preferred for heavy vehicles.

As an alternative to the power pack module 5, power may be supplied to the drive wheel system from external sources or under circumstances kept in storage in the wheeled bogie module 2 itself.

A suitable number of the said wheeled bogie modules 2 may be mounted on any given vehicle at any location best suited to the specific requirements of the vehicle in question. Subsequently, the central control unit CCU must be encoded with the position of each wheeled bogie module 2 on the vehicle. In practical applications, the central control unit CCU will have to be encoded with the co-ordinates of each bogie module 2 on the mobile chassis, and each bogie module 2 must be encoded with its orientation relative to the co-ordinate system of the mobile chassis. For this purpose, suitable programming means, such as digital switches 15 and 16 (indicated in Fig. 3), may be provided on the bogie control devices 3 and on the central control unit CCU, respectively. Once this information has been defined and stored in the central control unit CCU and the bogie control devices 3 has been provided with information about their orientation as described below, the modular omni-directional power drive system is ready for use.

Whichever way the control unit CCU would transmit individual commands from the actuating device 30 to the wheeled bogie modules 2 related to the location of each module fitted on the vehicle, a co-ordinated movement in the horizontal plane of the total vehicle is achieved. The object or vehicle could be combined of two or more mutually articulated or telescopically interconnected subunits each provided with one or more bogie control device(s) 2 and the central control unit CCU may then control the movement of each bogie so as to obtain movement of the total vehicle including mutual movement of the subunits. Communication between the control unit CCU and the bogie control devices 3 of the wheeled bogie modules 2 can take place via connecting cables 6, via radio signals or whichever form of communication is best suited to fit the vehicle in question.

As already mentioned, the power pack module 5 may be a separate unit or under circumstances be contained in one or more of the wheeled bogie modules 2. Alternatively, it may be united with the central control unit CCU, which in itself may be a self-contained unit or be part and parcel with the man/machine interface module 4. In certain cases the power required may already be part of the drive vehicle itself and thus not be required as a new item to be added to the drive vehicle.

Likewise, the control unit CCU may be a unit in its own right or - more preferred - it may be united with the man/machine interface in the form of the actuating device 30, as the function of these two units are closely related.

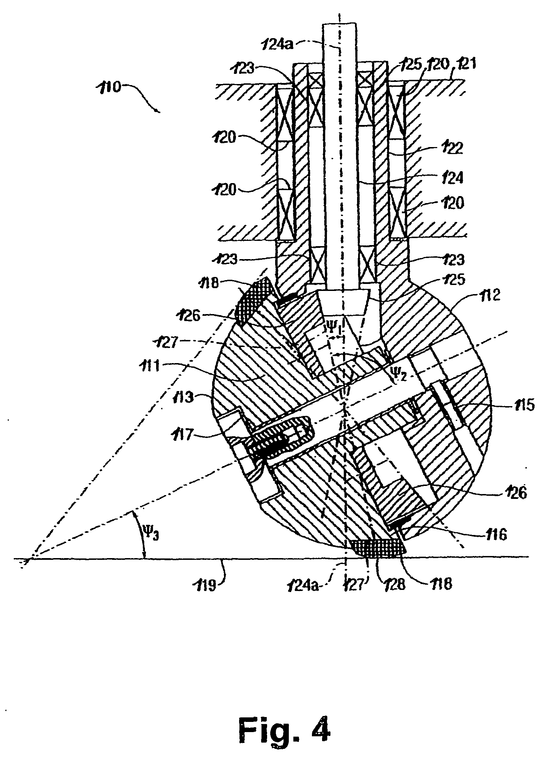

Fig. 4 illustrates a presently preferred drive wheel 110 to be used in the wheel bogies of the present invention and of the type disclosed in US patent No. 6,474,434, which is hereby incorporated herein by reference. It should be understood, however, that any other similar omni-directional drive wheel could be used.

This drive wheel 110 includes a wheel member 111 capable of rotating relative to a support member 112 about an axle that is fixed to the support member 112 by a screw115. The wheel member 111 has a frusto-spherical outer surface 113 and first and second end surfaces 116 and 117, respectively. An elastomeric tread 118 extends around the periphery of the wheel member 111 adjacent to the first end surface 116. A curved outer surface of the tread defines a rolling line 128 that contacts the ground surface 119 over which the wheel member 111 travels when in use.

A tubular steering or support shaft 122 extends downwardly from the bogie module 2 rotatably mounted in bearings 120, which are arranged between the bogie 2 and the support member 112. A drive shaft 124 is mounted concentrically within the tubular steering or support shaft 122 by means of bearings 123. The drive shaft 124 may be rotated by the drive motor M2 diagrammatically indicated in Fig. 1. Similarly, the steering shaft 122 may be rotated by the steering motor M1 (Fig. 3).

The free end of the drive shaft 124 adjacent to the wheel member 111 has a bevel pinion 125 engaging with a crown wheel 126 mounted on the end surface 116 of the wheel member 111. As shown in the sectional view in Fig. 4, the pinion 125 and the crown wheel 126 defines a line of engagement 127 that is at an angle to the longitudinal axis 124a of the drive shaft 124. Accordingly, when the drive shaft 124 is rotated about its longitudinal axis 124a by the drive motor M2 under the control of the central control unit CCU and the bogie control device 3 at the bogie 2, the wheel member 111 is rotated relative to the support member 112 and so that the wheel member 111 is driven over the ground or floor surface 119. The curved outer surface of the wheel tread 118 is intersected by the line of engagement 127 of the gears 125, 126 at the rolling line 128.

Figs. 5 - 10 disclose only one embodiment of the modular components of the system according to the invention, which may be controlled by an operator via the actuating device 30. While the system according to the invention may be mounted on an infinite variety of different objects or wheeled vehicles, the invention is assumed to be mounted onto some kind of vehicle (not shown) having only free swivelling wheels or casters of its own.

In Fig. 5 the handles 33 and the control plate 32 connected thereto have been pushed to the right as indicated by arrow A, which causes both wheels 1 on the two wheeled bogie modules 2 to be turned towards the right a, b. Then the motors or engines M2 are activated, and the entire vehicle will move to the right as indicated by an arrow D.

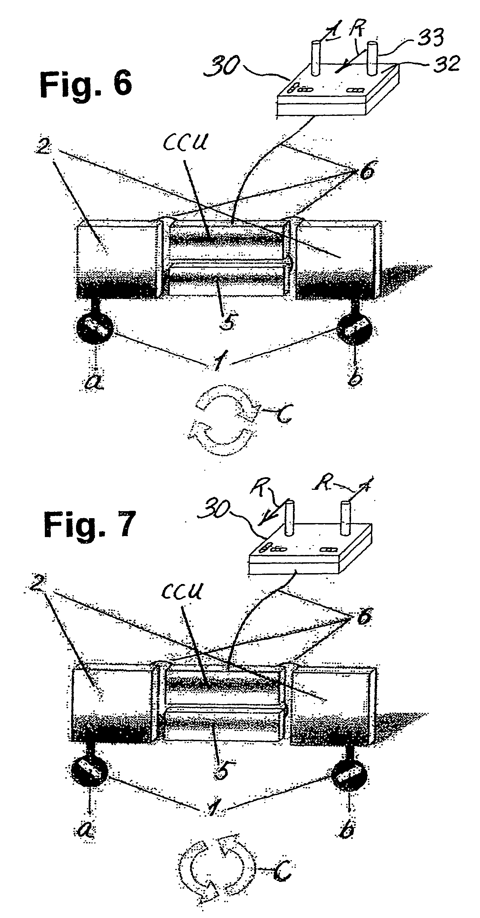

In Fig. 6 the operator pulls the right handle 33 and pushes the left handle 33 as indicated by arrows R, whereby the steering motors M1 causes the wheels 1 on the two wheeled bogie modules 2 to orientate themselves at mutually oblique angles relative to the athwart direction of the vehicle a, b. Then the drive motors M2 are activated and the entire vehicle will rotate clockwise around a centre of rotation as indicated by arrows C and identified by the angular orientation a, b of each of the two wheels 1.

In Fig. 7 operator pulls the left handle 33 and pushes the right handle 33 as indicated by arrows R, which causes the wheels 1 on the two wheeled bogie modules 2 to orientate themselves at mutually oblique angles relative to the athwart direction a, b of the vehicle. Then the drive motors M2 are activated, and the entire vehicle will rotate counter clockwise around a centre of rotation identified by the angular orientation a, b of each of the two wheels.

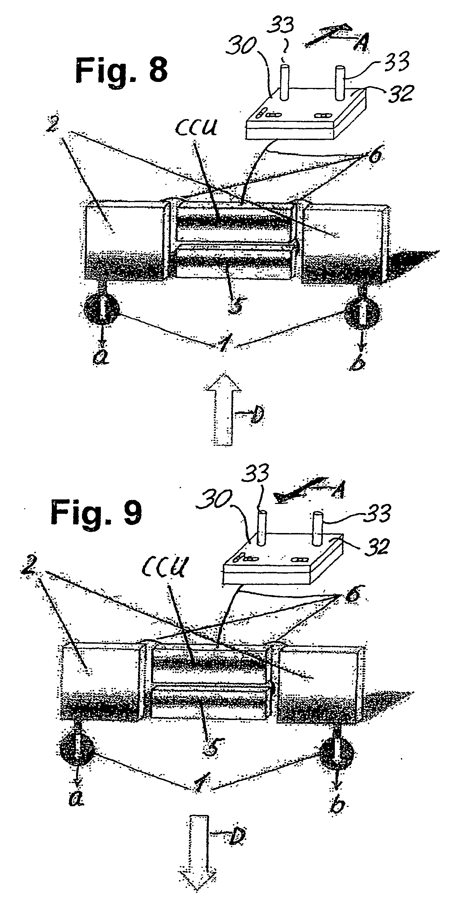

In Fig. 8 the handles 33 are pushed to forwards (arrow A) causing both wheels 1 on the two wheeled bogie modules 2 to be turned parallel to the longitudinal direction a, b of the vehicle. Then the drive motors or engines M2 (Fig. 1) are activated, and the entire vehicle will move forwards.

In Fig. 9 the handles 33 are pulled backwards as indicated by the arrow A, which causes the steering motors M1 (Fig. 1) to turn both wheels 1 on the two wheeled bogie modules 2 parallel to the longitudinal direction a, b of the vehicle. Then the drive motors or engines M2 are activated, and the entire vehicle will move backwards as indicated by the arrow D.

In Fig. 10 the handles 33 are pulled backwards at an oblique angle as indicated by the arrow A causing both wheels 1 on the two wheeled bogie modules 2 to be turned mutually parallel at the same oblique angle (indicated by arrow D) as the joystick relative to the longitudinal direction a, b of the vehicle. Then the drive motors M2 are activated, and the entire vehicle will move in that same oblique direction.

In Fig. 11 the modular system according to the invention is mounted on an undercarriage 9 of a stylised pallet mover 7 with freely swivelling front wheels 8, and both wheeled bogie modules 2 are mounted at the rear end of the pallet mover by means of mounting brackets 10. The lifting fork of the pallet mover 7 and the stylised hoisting mechanism 11 are shown for completeness. The driving characteristics of the vehicle illustrated in Fig. 11 are as illustrated in Figs. 5 - 10 and as described in connection therewith.

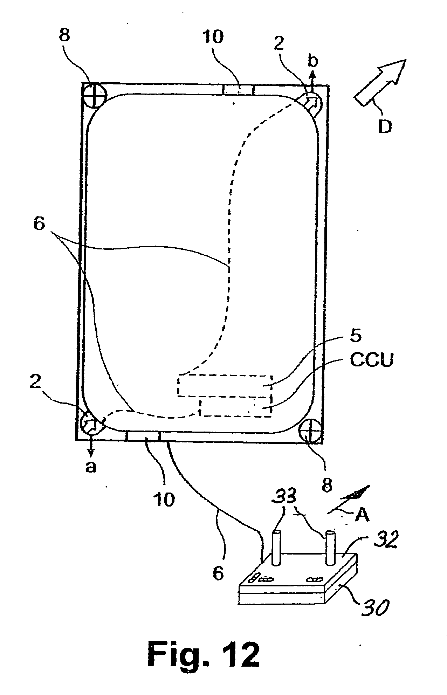

In Fig. 12 the system according to the invention is shown mounted underneath a stylised hospital bed with two freely swivelling wheels or casters 8. In this example the wheeled bogie modules 2 are fitted at diagonally opposite corners of the bed to illustrate the freedom of mounting of the wheeled bogie modules on the vehicle in question subject to the one proviso that the actual location of each wheeled bogie module is encoded into the storage memory of the central control unit CCU as explained later more in detail. The entire driving characteristics of the vehicle illustrated in Fig. 12 will then again be explained above end as illustrated in Figs. 5 - 10.

One or both of the two freely swivelling wheels 8 on the stylised hospital bed in Fig. 12 may be substituted by additional wheeled bogie modules 2 with the one proviso that the actual location of each additional wheeled bogie module is likewise encoded into the storage memory of the central control unit CCU.

In principle, any desired number of wheeled bogie modules 2 according to the invention may be mounted on an object or vehicle.


PRINCIPLES OF DRIVE CONTROL


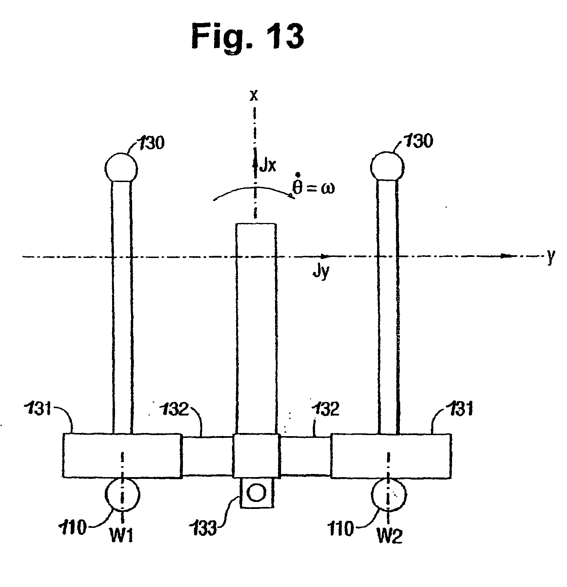

Fig. 13 is a simplified representation of an object or a chassis, which has been rendered omni-drivable by mounting a drive wheel system according to the invention thereon. Thus, the chassis shown has been provided with two bogie modules 2 each having a drive wheel 110 and two standard non-driven, freely swivelling wheels 130. The chassis shown in Fig. 13 is capable of undergoing change in lateral dimension simply by a movement of the respective drive wheels either relatively towards or away from each other. In this embodiment the chassis can be considered composed of two sub-carriages 131 having lateral members 132 that can telescopically or otherwise move with respect to each other. Mutual movement of the sub-carriages may be obtained simply by driving the two drive wheels 110 either towards or away from each other thereby allowing the lateral dimension of the chassis to be adjusted. In the arrangement depicted in Fig. 13, the lateral members 132 may move so as to ensure that the respective distances of the drive wheels 110 from a central linking housing 133 remain symmetrical relative to the housing 133. The capability of the chassis to adjust its lateral dimensions can be particularly useful when the chassis has to pass through a narrow opening, such as a door opening. Fig. 13 gives an example of a reference co-ordinate system and axis orientation for translatory motion and rotation.

When a drive wheel system according to the invention has been mounted on an object or vehicle to be rendered self-propelling, the central control unit CCU controlled by commands from the actuating device 30, as well as the bogie control devices 3 (Fig. 3) at the bogie modules 2 have to be programmed in order to obtain a correlated function of the various parts of the system. For this purpose it is useful to utilise an imaginary co-ordinate system located in a plane parallel to the ground or floor surface 119 (Fig. 4) so that the axis of abscissas or x-axis defines the forwards/backwards movement while the ordinate axis or y-axis defines the transverse or sideways movement of the chassis relative to an arbitrary reference point. In Fig. 13 forward movement from the reference point is considered movement in a positive direction along the x-axis and sideways movements to the right from the reference point is considered movement in a positive direction along the y-axis. Any rotation about the reference point is considered positive if the rotation is clockwise when viewed from above.

As indicated above, the chassis exemplified in Fig. 13 may telescopically change its width. This width variation is termed SHIFT and is obtained purely by wheel control without any internal telescope drive, merely referring to a mechanical link (or roller chain and sprockets) to ensure symmetry (or any other defined relation) of the two sub-carriages 131 relative to the central body 133. The necessary feed back information to the control unit may, for example, be derived from one of the sprockets.

For the purpose of understanding the operation of the drive motor M2 and the steering motor M1, reference will be made to the following definitions:

| SYMBOL | DESCRIPTION | DIMENSION |
|---|---|---|
| Jx | X-command, normalised. | m/s |
| Jy | Y-command, normalised. | m/s |
| $\omega$ | Turn command, normalised. | rad/s |
| U | Speed command, normalised. | m/s |
| Wx | Wheel X-co-ordinate | m |
| Wy | Wheel Y-co-ordinate | m |
| VW | Wheel speed command | m/s |
| VWx | Wheel speed X-command | m/s |
| VWy | Wheel speed Y-command | m/s |
| $\varphi$ | Input command direction | Radian |
| $\psi i$ | Wheel direction command | Radian |
| S'y | K1(Wyi - Wyo) . SHIFT of Wx and Wy. | m/s |
| K1 | Shift time constant | $s^{-1}$ |
| K2 | Rate feed forward | Nondim |
| K3 | Proportional gain | $s^{-1}$ |
| K4 | Wheel offset | m |

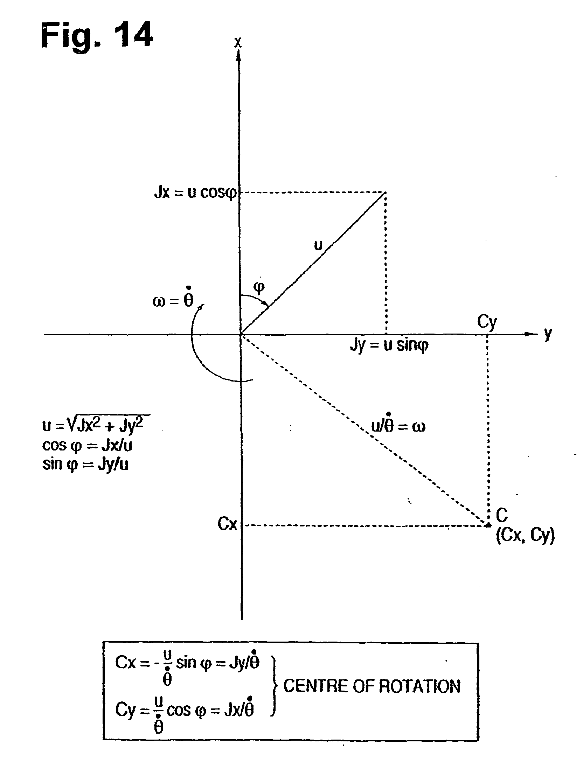

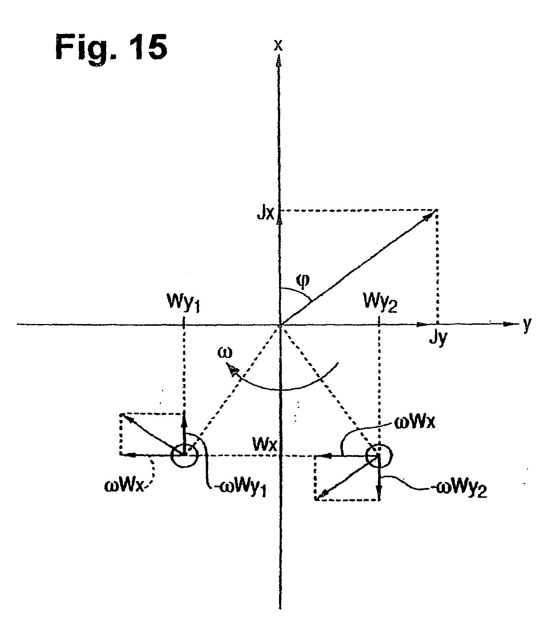

The general movement of a drive carriage can be described at any given moment as a rotation about some point in the ground surface, or as the linear superposition of a movement of pure translation and a rotation about the reference point. From this the motion geometry appears from Figs. 14 and 15, and the following control equations follow:

$$VWx \ = \ Jx - \omega Wy$$

$$VWy \ = \ Jy + \omega Wx + s'y$$

$$V_W = \sqrt{(U\cos\varphi - \omega W_y)^2 + (U\sin\varphi + \omega W_x + s'_y)^2} = \sqrt{(J_x - \omega W_y)^2 + (J_y + \omega W_x + s'_y)^2}$$

$$\cos\psi_i = \frac{U\cos\varphi - \omega W_y}{V_w} = \frac{J_x - \omega W_y}{V_w}$$

$$\sin \psi_i = \frac{U \sin \varphi + \omega W_x + s'_y}{V_{w'}} = \frac{J_y + \omega W_x + s'_y}{V_w}$$

## CENTRAL CONTROL UNIT

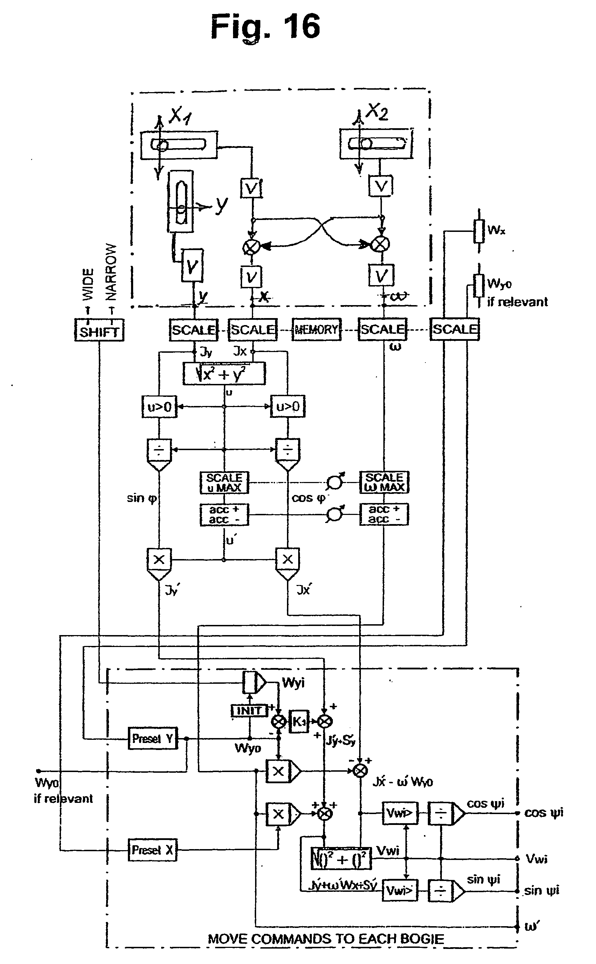

Figure 16 is a schematic block-diagram of an embodiment of the central control unit CCU. The control unit illustrated in Fig. 16 comprises three signal transmitters indicated by 20 associated with the actuating device 30, namely an $X_1$-gauge and an $X_2$-gauge for the longitudinal commands, a Y-gauge for the athwart command, the rotation command $\omega$ being derived from the two longitudinal commands as previously described.

The central control unit further comprises a Wx-potentiometer for manual setting of the Wx-co-ordinate and a Wyo-potentiometer for the feedback of the actual Wyo-co-ordinate as measured by the telescopic movements between the two drive bogies if required. All the values are subject to ADC-conversion and subsequent scaling to obtain identifiable dimensional values. The scale factors are saved in a memory when the circuit is off power. After the digital scalers, the corresponding values Jx, Jy and $\omega$ appear on normalised form independent of individual device tolerances. The command speed components Jx and Jy are now combined to the normalised speed command U. From these values $\sin\varphi$ = Jy/U and $\cos\varphi$ = Jx/U are obtained subject to U>0.

The two values U and $\omega$ are now modified through scale factors to obtain suitable full scale deflection speeds in accordance with the operator's requirement. Similarly the command values are subject to maximum acceleration and deceleration restrictions through selectable filters.

These modified values are U' and $\omega$'. Subsequently, the modified command components J'x = U'$\cos\varphi$ and J'y = U'$\sin\varphi$ are obtained, which method ensures simultaneity between the two vector components J'x and J'y . Selectable damping routines to the input commands are applied to the values J'x = U'$\cos\varphi$ and J'y = U'$\sin\varphi$ together with the rotation command $\omega$' at this level. An integrator stores the output value Wyi, which is the instantaneous command value for the athwart distance Wyo of each drive wheel from the centre line.

During start up of the system this integrator is initialised with Wyo = Wyi in order to ensure bump free start up of the system. During operation the integrator accepts input commands from the two push buttons SHIFT-WIDE and SHIFT-NARROW in Fig. 16 to increase or decrease the value of Wyi. The value Wyo represents the distance of each drive wheel from the centre line of the drive chassis and is to be taken as positive for the right hand drive wheel and negative for the left hand wheel.

The difference between the two is used to generate the correction s'y = K1(Wyi - Wyo), which is added to the commands from the joystick in the athwart direction to the wheel control. This causes the wheels to approach the required distance between them in an exponential manner with a time constant equal to K1 if the bandwidth of the subsequent control system is sufficiently larger than 1/K1.

The remaining motion commands originate directly from Joystick manipulations generating the two vector components J'x and J'y as well as $\omega$', which combine with the shift command in accordance with the above formulae to generate the two wheel command vectors: VWx = J'x - $\omega$'Wy (longitudinal direction) and: VWy = J'y + $\omega$' Wx + s'y (athwart direction). This set of wheel commands is generated separately for each bogie, and differs for each bogie in relation to the different wheel co-ordinates in the overall chassis co-ordinate system. From the root of the sum of squares of these two command vectors is derived the drive wheel command speed VWi (always a positive number).

Each of these vectors divided by VWi subject to VWi > 0, generate $\sin\psi i$ and $\cos\psi i$ where $\psi i$ is the input command angle for the wheel drive direction in the overall chassis co-ordinate system. The values VWi subject to VWi > 0, $\sin\psi i$ and $\cos\psi i$ are generated by the central control unit with reference to the overall chassis co-ordinate system for each of the active bogies and transmitted on digital form to each bogie together with the normalized chassis rotation command $\omega$'.

These signals are preferably transmitted from the central control unit CCU to each of the bogie control devices 3 via an optocoupler transfer 24 for galvanic separation of the central control unit CCU and the bogie control devices 3, respectively. Likewise, monitoring information may be re-transmitted from each of the bogie control devices 3 back to the central control unit via similar optocouplers (not shown).

## BOGIE CONTROL DEVICE

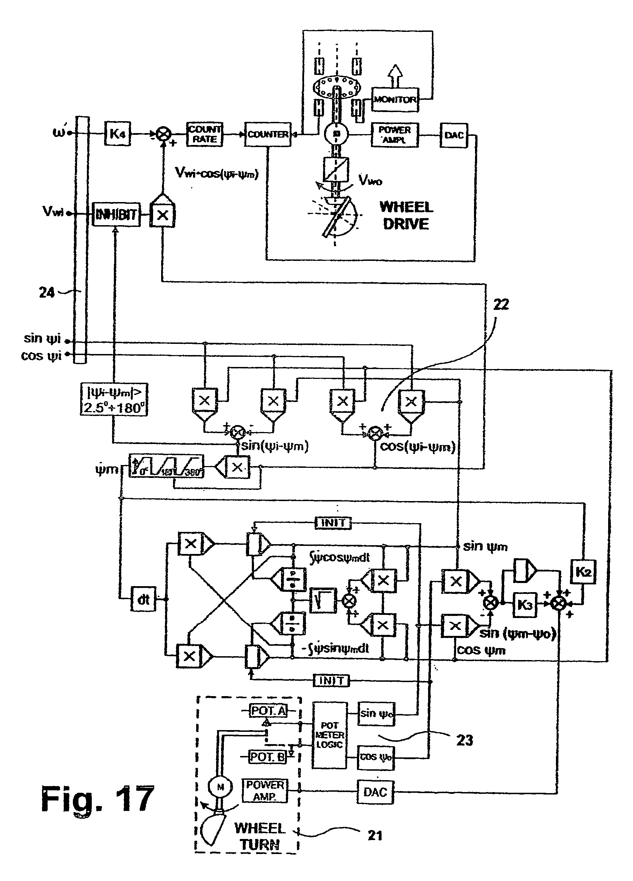

The mathematical model of Wheel Turn will now be described with reference to Fig. 17, which is a diagrammatic illustration or a block diagram of the electronic bogie control device 3 arranged at each bogie unit 2. The wheel turn part of Fig. 17 defined by a dotted line frame is indicated by 21 and comprises mainly of two integrators executing the following two relations:

$$\sin \psi_m = \int \dot{\psi}_m \cos \psi_m \, dt$$

$$\cos \psi_m = -\int \dot{\psi}_m \sin \psi_m \, dt$$

subject to radius normalization.

The input command to this model is the value $\dot{\psi}_m$ (required model rate of turn) generated in the Angular Difference Group 22. The terms to be integrated are generated by the input rate of turn and the output values of the model, cosψm and sinψm, respectively. The root of the sum of the squared output values is used to maintain the integrator outputs on a unity radius value. Thus, the whole block thus constitutes an unlimited circular integrator of the input value $\dot{\psi}_m$. The two integrators can, when required and particularly at power-up, be initialised with the values cosψo and sinψo, representing the actual angular position of the physical drive wheel housing. The purpose of this mathematical model is to obtain a controlled rotation of the physical drive wheel housing, with a known and noise-free value of $\dot{\psi}_m$ irrespective of any external disturbances of the physical drive wheel housing.

The physical drive wheel housing is subsequently locked on to the mathematical model through a servo control loop 23, the details of which are shown in Fig. 17. The input command value to this servo is the sine of the angular difference between the physical drive wheel housing and the mathematical model given by sin(ψm - ψo) = sinψm cosψo - cosψm sinψo. The gain coefficient K3 controls the bandwidth of this loop, which must be significantly larger than what results from the maximum rate of turn permitted into the mathematical model of wheel direction.

The feed-forward of $\dot{\psi}_m$ through the coefficient K2 ensures, that the dynamic value of sin(ψm - ψo) is always small, K2 having a value matching the required servo input for the rate of turn in question. Thus, the correspondence between the physical drive wheel housing and the mathematical model is always very good up to the torque limit of the wheel turn servo motor.

THE ANGULAR DIFFERENCE GROUP

This group consists mainly of the four multipliers evaluating the terms:

$$\sin(\psi i - \psi m) = \sin\psi i \; \cos\psi m \; - \cos\psi i \; \sin\psi m$$

$$\cos(\psi i - \psi m) = \cos\psi i \; \cos\psi m \; + \sin\psi i \; \sin\psi m$$

which identify the angular difference (ψi - ψm) between the wheel turn model direction ψm and the required direction ψi of the physical wheel housing. By one further multiplication the following term is obtained:

$$\tfrac{1}{2}\sin 2(\psi i - \psi m) = \sin(\psi i - \psi m) \; \cos(\psi i - \psi m),$$

which identifies the double angular difference. Using this value as a command input to the wheel turn model, two stable and two unstable balance conditions are obtained:

$$\text{The two stable ones are } (\psi i - \psi m) = 0 \text{ and } (\psi i - \psi m) = \pi,$$

and

$$\text{the two unstable ones are } (\psi i - \psi m) = \pi/2 \text{ and } (\psi i - \psi m) = 3\pi/2.$$

This means, that the mathematical model and, consequently, also the physical wheel housing will line up either parallel to, or anti-parallel to the required direction ψi,, whichever is the nearer.

This saves time and energy in the wheel turn motion, because the wheel turn housing will never need to turn more than an angle π/2 to attain any new required direction. By subsequently multiplying the required wheel drive speed VWi , which is always a positive value, with the term cos(ψi - ψm) and use cos(ψi - ψm)VWi as the command value for wheel drive speed, it is ensured, that motion is always obtained in the correct direction irrespective of the choice between the two alignment possibilities.

Instead of directly using the term sin2(ψi - ψm) as the command input to the wheel turn model, a modified version, which generates a linear variation around the two stable balance conditions up to a well-defined maximum value and suppresses actual zeroes at the unstable conditions.

WHEEL DRIVE COMMAND

As already mentioned, the term cos(ψi - wm)VWi is applied as the input command. However, because the wheel tread is not moving along a trajectory traced out by centre axis of the wheel with its given co-ordinates, but at a trajectory offset from this by the amount of the wheel offset, another term ω'K4, where K4 is the wheel offset in meters, is subtracted from the wheel speed command. This compensates for the wheel tracing out a curve of a slightly modified radius in a turning condition. Further the command is subject to some inhibit and acceleration constraints as a tool to ensure smooth operation during varying operational conditions. The actual wheel drive servo is a digital/analogue system referring to up/down counts generated from a counter wheel directly on the motor shaft. The accumulated output counts are subtracted from similarly accumulated command counts, the resulting difference (positive or negative) converted into analogue form and given as the input to the power amplifier for the wheel drive motor M2.

The accumulated input counts result from a pulse rate generated in direct proportion to the finished wheel speed command cos(ψi - ψm)VWi - ω'K4 and subject to various inhibit conditions. The output counts from the counter wheel are duplicated into a monitor function, such that if the permissible mutual status of the photo read outs should be violated, a STOP condition is issued throughout the entire system and prevents any further driving.

LIMITING CONSIDERATIONS

Apart from the obvious limitations on speed, force and torque set by the control servos involved, a drive system of this nature requires some further considerations.

As a result of combined drive and turn movements of the total system, either wheel may get into the situation of receiving a drive command which reduces in magnitude towards zero, passes through or very near to zero and again increases in the opposite direction. If this takes place exactly through zero, this particular configuration is able to cope, as the drive command just goes through zero and then comes up again opposite without changing the orientation of the wheel housing. However, in most cases the command will just miss the exact zero point by a small amount, in which case the wheel housing, because of the polar co-ordinate nature of the wheel system, will be called upon to turn very fast in order to follow the actual command around.

If the limits of this capability are exceeded, jerks will be experienced in the drive motion of the total system. For this reason it is advantageous to set up restrictions of the fundamental command group (J'x , J'y , ω', s'y), such that VWi cannot get below a certain value if U' > VWi . Such conditions can be set up in various ways, the details of which will be related to the actual application of the drive system.

The following could be chosen as an example:

If (VWi < VWi,min) ^ (U' > 2VWi,min); then [J'x + 2VWi,mincosψi , J'y + 2VWi,minsinψi]; else [J'x, J'y];

where VWi,min is a minimum value of VWi below which uncertainties in the orientation determination of the wheel housing may become unacceptable.

It should be understood that various modifications and amendments of the actuating device and the wheel drive system described above and shown in the drawings could be made without departing from the scope of the following claims. As an example, the omni drive wheels used could be of any known type other than that described, and the central control unit as well as the electronic bogie control devices 3 could be modified as long as a similar function is performed.

**Claims**

1. An actuating device (30) for manually actuating driving and steering means (M1, M2) for a wheeled, power driven object or vehicle, said actuating device comprising
a base member (31),
an actuating member (32) having gripping means (33) and being supported by the base member so as to be displaceable thereon,
at least first and second force transducers (34, 38), the first force transducer (34) being arranged to receive a force component manually applied to the actuating member in a predetermined first direction (X), only,
each of said at least first and second force trasducers being adapted to generate an output signal to the driving and steering means, **characterized in**
**that** the actuating member (32) is displaceable on the base member along at least one plane,
**that** the second force transducer (38) is arranged to receive a force component manually applied to the actuating member in a predetermined second direction (Y) only, transversely to the first direction along said plane, and
**that** the output signals generated to the driving and steering means are responsive to the strength of the force components received.

2. An actuating device according to claim 1, wherein said predetermined first and second directions extend at mutual right angles.

3. An actuating device according to claim 1 or 2, wherein said first predetermined direction (X) extends in the normal direction of travel of the vehicle.

4. An actuating device according to any of the claim 1-3, wherein said gripping means comprises a pair of mutually spaced gripping handles (33); which are fixedly mounted on the actuating member (32) and symmetrically arranged in relation to said first predetermined direction (X), said first force transducer (34) and a similar third force transducer being arranged symmetrically in relation to the said first predetermined direction (X) said third force transducer being arranged like the first force transducer to receive a force component manually applied to the actuating member in said predetermined first direction only.

5. An actuating device according to any of the claims 1-4, wherein each force transducer (34,38) is fixedly mounted in relation to the base member (31), each force transducer having a force transmitting member (36,40) extending into and engaging with the walls of an associated recess (37,41) in the actuating member (32) said recess being shaped such that only a force component in the said predetermined direction may be transmitted from the actuating member to the force transducer via said transmitting member.

6. An actuating device according to any of the claims 1-5, wherein the force transducers comprise strain gauges.

7. An actuating device according to claim 6, wherein each force transducer comprises a cantilever beam (35,39) having strain gauges mounted thereon, the force component from the actuating member being applied to the free end of the beam so as to generate bending stresses therein.

8. An actuating device according to any of the claims 1-7, wherein the actuating member is freely floating on a liquid film or layer (42).

9. An actuating device according to claim 8, wherein said liquid film or layer is a layer of viscous oil or grease.

10. An actuating device according to claim 9, wherein the liquid film or layer is a layer of damping grease.

11. An actuating device according to any of the claims 1-10, further comprising an electronic circuit (CCU) for receiving the output signals from the force transducers and for processing these signals prior to transmitting them to the driving and steering system of the vehicle, so as to obtain substantially the same movement of the vehicle as if it had been manually driven by the forces applied to the gripping means, but in an intensified scale.

12. A method for manually actuating driving and steering means (M2,M1) for a wheeled, power driven object or vehicle, said method comprising
applying a manual force to an actuating member (32)
decomposing the manual force into at least two components extending in mutually intersecting, predetermined directions (x,y)
applying each of said force components to a respective transducer (34,38), and transmitting from each of said transducers to the steering system an output signal, which is responsive to the strength of the force component received by the transducer relating to the respective direction.

13. A method according to claim 12, wherein the manual force is applied to gripping means (33) provided on the actuating member (32), which is supported by a base member (31) so as to be freely displaceable thereon along a plane in said predetermined directions only.

14. A method according to claim 12 or 13, wherein said predetermined directions extend at mutual right angles.

15. A method according to any of the claims 12 - 14, wherein one (X) of said predetermined directions extends in the normal direction of travel of the vehicle.

16. A method according to any of the claims 13-15, wherein the actuating member (33) is freely floating on a liquid film or layer (42).

17. A method according to claim 16, wherein said liquid film or layer is a layer of viscous oil or grease.

18. A method according to claim 17, wherein the liquid film or layer is a layer of damping grease.

19. A method according to any of the claims 12 - 18, wherein the transducer stiffness and the mass of the control plate are combined so as to obtain a natural frequency of resonance of the movable parts of the actuator device substantially exceeding frequencies of environmental vibrations.

20. A method according to claim 18 or 19, wherein the liquid layer is arranged so as to provide critical or just overcritical damping of the natural free resonance vibrations.

21. A method according to any of the claims 12-20, wherein the output signals from the transducers are transmitted to an electronic circuit (CCU), in which these signals are processed prior to further transmitting them to a driving and steering system (M2,M1) of a wheeled vehicle, so as to obtain substantially the same movement of the vehicle as if it had been manually driven by the force applied to the actuating member, but in an intensified scale.

22. A drive wheel system for supporting and driving an object, said wheel system comprising:

at least two separate wheeled units or bogies (2) to be mounted at selected locations on the object to support the same, each unit or bogie including a frame, at least one wheel member rotatably mounted in relation to the frame, driving means (M2) for rotating the wheel member(s) in relation to the frame, and steering means (M1) for moving the wheel member(s) in desired directions in relation to the frame,
electronic control means for controlling the function of the driving and steering means of said wheeled units or bogies and including
a pre-programmed bogie control device at each of said wheeled units or bogies, signal transmitting means, and
a pre-programmed central control unit (CCU) for outputting command signals to each of the pre-programmed bogie control devices via the signal transmitting means in response to input command signals received, and
an actuating device (30) according to any of the claims 1-11, the output signals generated by the transducers (34, 38) being transmitted to the electronic control means.

23. A system according to claim 22, wherein the central control unit comprises first programming means for inputting information about the mutual positions of the wheeled units or bogies on said object.

24. A system according to claim 22 or 23, wherein each bogie control device comprises second programming means for inputting information about the orientation of the associated wheeled unit in relation to a selected common axis when mounted on said object.

25. A system according to any of the claims 22 - 24, wherein the signal transmitting means comprise galvanic isolating device.

26. A system according to claim 25, wherein the galvanic isolating device comprises an optocoupler.

27. A system according to any of the claims 22 - 26, wherein the central control unit (CCU) comprises means for transforming output command signals to be transmitted to the bogie control devices at the wheeled units or bogies into serial digital strings.

28. A system according to any of the claims 22 - 27, wherein the electronics of the electronic control means is divided between the central control unit on the one hand and
each of the bogie control devices on the other hand so as to minimize data transmission via the signal transmitting means.

29. A system according to any of the claims 22 - 28, wherein the driving and steering means (M2,M1) of the wheeled units or bogies comprise motors selected from the group consisting of electric motors, hydraulic motors, pneumatic motors, steam engines thermodynamic engines and internal combustion engines.

30. A system according to any of he claims 22 - 29, wherein the wheeled units or bogies of the system are substantially identical.

31. A system according to any of the claims 22 - 30, wherein each wheel member is of the type comprising a support member (112) a wheel element (111) and a drive shaft (124) the drive shaft having a drive means (125) engaging a drive surface (126) on the wheel element to rotatably drive the wheel element relative to the support member, the drive shaft having a longitudinal axis (124a) and the engagement of the drive means and drive surface defining in vertical cross-section a line of engagement (127) that is at an acute angle to the longitudinal axis, the wheel element having a surface contacting portion (118) extending about its periphery and positioned such that It is intersected by the line of engagement substantially at where it contacts a supporting surface (119).

32. A system according to claim 31, wherein the drive shaft is substantially normal to the supporting surface.

33. A system according to claim 31 or 32, wherein the line of engagement is at an angle of between about 10° and 25° to the substantially normal longitudinal axis of the drive shaft.

34. A system according to any of the claims 31 - 33, wherein the support member has a substantially hemispherical outer surface with the wheel element rotatable about an axle extending normal to an inner surface of the hemispherical member.

35. A method of rendering an object self-propelling by means of a drive wheel system according to any of the claims 24 - 34, said method comprising:

mounting at least two of said wheeled units or bogies (2) on the object at selected locations thereof and with selected orientations in relation to a certain direction,
programming said first programming means by inputting information about the mutual positions of the wheeled units or bogies on said object,
programming said second programming means by inputting information about the orientation of the associated wheeled unit in relation to a selected direction, and
inputting command signals to the central control unit by means of the actuating device so as to move the vehicle along a desired path.

36. A method according to claim 35, comprising basing the information about the mutual positions of the wheeled units or bogies in relation to an actual or imaginary co-ordinate system on said object.

37. A method according to claim 36, wherein said selected direction is one of the axes of the co-ordinate system.

38. A method according to any of the claims 35 - 37, wherein the electronic control means are pre-programmed to ensure that the steering means are moving all wheel members of the wheeled units or bogies mounted on the said object such that any time during driving all wheel members are either moving along substantially parallel lines or substantially concentric arcs of circles.

39. A method according to any of the claims 35 - 38, wherein the command signals are transmitted from the central control unit to the bogie control devices at the wheedled units or bogies as serial digital strings.

40. A method according to any of the claims 35 - 39, wherein the object to be rendered self-propelled is a manually driven vehicle having a plurality of supporting wheels, at least some of these wheels being replaced so as to have the vehicle supported by at least two of said wheeled units or bogies and freely swivelling wheels or casters only.

41. A method according to any of the claims 35 - 40, wherein the central electronic control unit is mounted on the object.

**Patentansprüche**

1. Betätigungsvorrichtung (30) zum manuellen Betätigen von Antriebs- und Lenkmitteln (M1, M2) für ein kraftbetriebenes Objekt auf Rädern oder ein Fahrzeug, wobei die Betätigungsvorrichtung umfasst
   ein Tragelement (31);
   ein Betätigungselement (32) mit Greifmitteln (33), das getragen von dem Tragelement darauf verschiebbar ist,
   mindestens einen ersten und zweiten Kraftwandler oder -transducer (34, 38), wobei der erste Krafttransducer (34) zur Aufnahme einer Kraftkomponente vorgesehen ist, die nur in einer vorbestimmten ersten Richtung (X) von Hand an dem Betätigungselement angelegt wird,
   wobei jeder des mindestens ersten und zweiten Krafttranducers beschaffen ist, ein Ausgangssignal für die Antriebs- und Lenkmittel zu erzeugen, **dadurch gekennzeichnet, dass**
   das Betätigungselement (32) in mindestens einer Ebene auf dem Tragelement verschiebbar ist,
   der zweite Krafttransducer (38) zur Aufnahme einer Kraftkomponente vorgesehen ist, die nur in einer vorbestimmten zweiten Richtung (Y) quer zur ersten Richtung in der Ebene von Hand an dem Betätigungselement angelegt wird, und
   die für die Antriebs- und Lenkmittel erzeugten Ausgangssignale die Grössen der erhaltenen Kraftkomponenten entsprechen.

2. Betätigungsvorrichtung nach Anspruch 1, wobei sich die vorbestimmte erste und zweite Richtung in einem rechten Winkel zueinander erstrecken.

3. Betätigungsvorrichtung nach Anspruch 1 oder 2, wobei sich die erste vorbestimmte Richtung (X) in der normalen Fahrtrichtung des Fahrzeugs erstreckt.

4. Betätigungsvorrichtung nach einem der Ansprüche 1-3, wobei das Greifmittel ein Paar zueinander beabstandete Handgriffe (33) umfasst, die fest auf dem Betätigungselement (32) angebracht und symmetrisch in Bezug auf die erste vorbestimmte Richtung (X) angeordnet sind, wobei der erste Krafttransducer (34) und ein ähnlicher dritter Krafttransducer symmetrisch in Bezug auf die erste vorbestimmte Richtung (X) angeordnet sind, wobei der dritte Krafttransducer wie der erste Krafttransducer zur Aufnahme einer Kraftkomponente vorgesehen ist, die nur in der vorbestimmten ersten Richtung von Hand an dem Betätigungselement angelegt wird.

5. Betätigungsvorrichtung nach einem der Ansprüche 1-4, wobei jeder Krafttransducer (34, 38) fest in Bezug auf das Tragelement (31) angebracht ist, wobei jeder Krafttransducer ein Kraftübertragungselement (36, 40) aufweist, das sich in die Wände einer damit verbundenen Aussparung (37, 41) im Betätigungselement (32) erstreckt und darin eingreift, wobei die Aussparung derart ausgebildet ist, dass nur eine Kraftkomponente in der vorbestimmten Richtung von dem Betätigungselement über das Übertragungselement zum Krafttransducer übertragen werden kann.

6. Betätigungsvorrichtung nach einem der Ansprüche 1-5, wobei die Krafttransducer Dehnmessstreifen umfassen.

7. Betätigungsvorrichtung nach Anspruch 6, wobei jeder Krafttransducer einen einseitig eingespannten Balken (35, 39) mit daran angebrachten Dehnmessstreifen umfasst, wobei die Kraftkomponente des Betätigungselements an dem freien Ende des Balkens so angelegt wird, dass darauf Biegelasten ausgeübt werden.

8. Betätigungsvorrichtung nach einem der Ansprüche 1-7, wobei das Betätigungselement frei auf einem Flüssigkeitsfilm oder einer Flüssigkeitsschicht (42) schwimmt.

9. Betätigungsvorrichtung nach Anspruch 8, wobei der Flüssigkeitsfilm oder die Flüssigkeitsschicht eine Schicht aus viskosem Öl oder Fett ist.

10. Betätigungsvorrichtung nach Anspruch 9, wobei der Flüssigkeitsfilm oder die Flüssigkeitsschicht eine Schicht aus Dämpfungsfett ist.

11. Betätigungsvorrichtung nach einem der Ansprüche 1-10, weiterhin umfassend einen elektronischen Schaltkreis (CCU) zum Empfangen der Ausgangssignale der Krafttransducer und zum Verarbeiten dieser Signale vor ihrer Übertragung an das Antriebs- und Steuersystem des Fahrzeugs, um so im Wesentlichen dieselbe Bewegung des Fahrzeugs zu erhalten, als würde dieses von Hand durch die an den Greifmitteln angelegte Kraft angetrieben, jedoch in einem intensiveren Ausmaß.

12. Verfahren zum manuellen Betätigen von Antriebs- und Lenkmitteln (M2, M1) für ein kraftbetriebenes Objekt auf Rädern oder ein Fahrzeug, wobei das Verfahren umfasst

Anlegen einer manuellen Kraft an einem Betätigungselement (32),

Aufteilen der manuellen Kraft in mindestens zwei Komponenten, die sich in einander kreuzenden, vorbestimmten Richtungen (x, y) erstrecken,

Anlegen jede Kraftkomponente an einem entsprechenden Wandler oder Transducer (34, 38) und

Übertragung eines Ausgangssignals von jedem der Transducer an das Lenksystem, das die Grösse der vom Transducer erhaltenen Kraftkomponente der fraglichen Richtung entspricht.

13. Verfahren nach Anspruch 12, wobei die manuelle Kraft an den Greifmitteln (33) angelegt wird, die an dem Betätigungselement (32) vorgesehen sind, das getragen von einem Tragelement (31) in einer Ebene nur in den vorbestimmten Richtungen frei verschiebbar ist.

14. Verfahren nach Anspruch 12 oder 13, wobei sich die vorbestimmten Richtungen in einem rechten Winkel zueinander erstrecken.

15. Verfahren nach einem der Ansprüche 12-14, wobei sich eine (X) der vorbestimmten Richtungen in der normalen Fahrtrichtung des Fahrzeugs erstreckt.

16. Verfahren nach einem der Ansprüche 13-15, wobei das Betätigungselement (32) frei auf einem Flüssigkeitsfilm oder einer Flüssigkeitsschicht (42) schwimmt.

17. Verfahren nach Anspruch 16, wobei der Flüssigkeitsfilm oder die Flüssigkeitsschicht eine Schicht aus viskosem Öl oder Fett ist.

18. Verfahren nach Anspruch 17, wobei der Flüssigkeitsfilm oder die Flüssigkeitsschicht eine Schicht aus Dämpfungsfett ist.

19. Verfahren nach einem der Ansprüche 12-18, wobei die Steifigkeit des Transducers und die Masse der Lenkplatte derart kombiniert sind, dass eine natürliche Resonanzfrequenz der beweglichen Teile der Betätigungsvorrichtung erreicht wird, die Frequenzen von Umgebungsschwingungen wesentlich übersteigt.

20. Verfahren nach Anspruch 18 oder 19, wobei die Flüssigkeitsschicht dazu vorgesehen ist, eine kritische oder gerade überkritische Dämpfung der natürlichen freien Resonanzschwingungen bereitzustellen.

21. Verfahren nach einem der Ansprüche 12-20, wobei die Ausgangssignale der Transducers an einen elektronischen Schaltkreis (CCU) übertragen werden, in dem die Signale vor ihrer Übertragung an das Antriebs- und Lenksystem (M2, M1) des mit Rädern versehenen Fahrzeugs bearbeitet werden, um so im Wesentlichen dieselbe Bewegung des Fahrzeugs zu erhalten, als würde dieses von Hand durch die an dem Betätigungselement angelegte Kraft angetrieben, jedoch in einem intensiveren Ausmaß.

22. Antriebsradsystem zum Tragen und Antreiben eines Objekts, wobei das Radsystem umfasst:

mindestens zwei getrennte, mit Rädern versehene Einheiten oder

Fahrgestelle (2), die an ausgewählten Stellen an dem Objekt, um diesen zu tragen, angebracht werden können, wobei jede Einheit oder jedes Fahrgestell einen Rahmen, mindestens ein drehbar in Bezug auf den Rahmen angebrachtes Radelement, Antriebsmittel (M2) zum Drehen des Radelements bzw. der Radelemente in Bezug auf den Rahmen und Lenkmittel (M1) zum Bewegen des Radelements bzw. der Radelemente in gewünschte Richtungen in Bezug auf den Rahmen,

elektronische Steuermittel zum Steuern der Funktionen der Antriebs- und Lenkmittel der Einheiten oder Fahrgestelle und einschließend

eine vorprogrammierte Fahrgestellsteuervorrichtung an jeder der mit Rädern versehenen Einheiten oder jedem der Fahrgestelle, Signalübertragungsmittel und eine vorprogrammierte zentrale Steuereinheit (CCU) zur Ausgabe von Befehlssignalen an jede der vorprogrammierten Fahrgestellsteuervorrichtungen über die Signalübertragungsmittel als Reaktion auf empfangene Eingangsbefehlssignale und

eine Betätigungsvorrichtung (30) nach einem der Ansprüche 1-11, wobei die von den Transducern (34, 35) erzeugten Ausgangssignale an die elektronischen Steuermittel übertragen werden.

23. System nach Anspruch 22, wobei die zentrale Steuereinheit erste Programmiermittel für die Eingabe von Informationen über die wechselseitige Position der mit Rädern versehenen Einheiten oder Fahrgestelle an dem Objekt umfasst.

24. System nach Anspruch 22 oder 23, wobei jede Fahrgestellsteuervorrichtung zweite Programmiermittel für die Eingabe von Informationen über die Ausrichtung der verbundenen mit Rädern versehenen Einheit in Bezug auf eine ausgewählte gemeinsame Achse umfasst, wenn an dem Objekt befestigt.

25. System nach einem der Ansprüche 22-24, wobei die Signalübertragungsmittel eine galvanische Trennvorrichtung umfassen.

26. System nach Anspruch 25, wobei die galvanische Trennvorrichtung einen Optokoppler umfasst.

27. System nach einem der Ansprüche 22-26, wobei die zentrale Steuereinheit (CCU) Mittel zum Umwandeln der Ausgangsbefehlssignale, die an die Fahrgestellsteuervorrichtung an den mit Rädern versehenen Einheiten oder Fahrgestellen zu übertragen sind, in serielle digitale Bitfolgen umfasst.

28. System nach einem der Ansprüche 22-27, wobei die Elektronik der elektronischen Steuermittel derart zwischen der zentralen Steuereinheit einerseits und jeder der Fahrgestellsteuervorrichtungen andererseits aufgeteilt ist, um die Datenübertragung über die Signalübertragungsmittel auf ein Minimum zu beschränken.

29. System nach einem der Ansprüche 22-28, wobei die Antriebs- und Lenkmittel (M2, M1) der mit Rädern versehenen Einheiten oder Fahrgestelle Motoren umfasst, ausgewählt aus der Gruppe, bestehend aus Elektromotoren, Hydraulikmotoren, Pneumatikmotoren, Dampfmotoren, thermodynamischen Motoren und Verbrennungsmotoren.

30. System nach einem der Ansprüche 22-29, wobei die mit Rädern versehenen Einheiten oder Fahrgestelle des Systems im Wesentlichen identisch sind.

31. System nach einem der Ansprüche 22-30, wobei jedes Radelement von der Art ist, die ein Tragelement (112), ein Radelement (111) und eine Antriebswelle (124) umfasst, wobei die Antriebswelle ein Antriebsmittel (125) aufweist, das in eine Antriebsfläche (126) des Radelements eingreift, um das Radelement drehbar in Bezug auf das Tragelement anzutreiben, wobei die Antriebswelle eine Längsachse (124a) aufweist und der Eingriff des Antriebsmittels mit der Antriebsfläche im senkrechten Querschnitt eine Eingriffslinie (127) festlegt, die mit der Längsachse einen spitzen Winkel bildet, wobei das Radelement einen Flächenberührungsabschnitt (118) aufweist, der sich um seinen Umkreis erstreckt und derart angeordnet ist, dass er von der Eingriffslinie im Wesentlichen dort, wo er eine Tragfläche (119) berührt, gekreuzt wird.

32. System nach Anspruch 31, wobei die Antriebswelle im Wesentlichen lotrecht zur Tragfläche ist.

33. System nach Anspruch 31-32, wobei die Eingriffslinie mit der im Wesentlichen lotrechten Längsachse der Antriebswelle einen Winkel zwischen etwa 10° und 25° einschließt.

34. System nach einem der Ansprüche 31-33, wobei das Tragelement eine im Wesentlichen halbkreisförmige Außenfläche aufweist, wobei das Radelement drehbar um eine Achse ist, die sich lotrecht zu einer Innenfläche des halbkreisförmigen Elements erstreckt.

35. Verfahren, mit dem ein Objekt mithilfe eines Antriebsradsystems nach einem der Ansprüche 24-34 selbstgetrieben gemacht wird, wobei das Verfahren umfasst:

Anbringen von mindestens zwei der mit Rädern versehenen Einheiten oder Fahrgestelle (2) an ausgewählten Stellen und mit ausgewählter Ausrichtung in Bezug auf eine bestimmte Richtung an dem Objekt,
Programmieren der ersten Programmiermittel durch Eingabe von Informationen über die wechselseitige Position der mit Rädern versehenen Einheiten oder Fahrgestelle an dem Objekt,
Programmieren der zweiten Programmiermittel durch Eingabe von Informationen über die Ausrichtung der verbundenen Einheit in Bezug auf eine ausgewählte Richtung und
Eingeben von Befehlssignalen an die zentrale Steuereinheit mittels der Betätigungsvorrichtung, um so das Fahrzeug entlang eines gewünschten Weges zu bewegen.

**36.** Verfahren nach Anspruch 35, umfassend das Basieren der Informationen über die wechselseitige Position der mit Rädern versehenen Einheiten oder Fahrgestelle auf einem tatsächlichen oder imaginären Koordinatensystem an dem Objekt.

**37.** Verfahren nach Anspruch 36, wobei die ausgewählte Richtung eine der Achsen des Koordinatensystems ist.

**38.** Verfahren nach einem der Ansprüche 35-37, wobei die elektronischen Steuermittel vorprogrammiert sind, um zu gewährleisten, dass die Lenkmittel alle Radelemente der an dem Objekt angebrachten mit Rädern versehenen Einheiten oder Fahrgestelle derart bewegen, dass sich alle Radelemente zu jedem Zeitpunkt während des Antriebs entweder entlang im Wesentlichen paralleler Linien oder im Wesentlichen konzentrischer Kreisbögen bewegen.

**39.** Verfahren nach einem der Ansprüche 35-38, wobei die Befehlssignale als serielle digitale Bitfolgen von der zentralen Steuereinheit an die Fahrgestellsteuervorrichtungen an den mit Rädern versehenen Einheiten oder Fahrgestellen übertragen werden.

**40.** Verfahren nach einem der Ansprüche 35-39, wobei das Objekt, dem Selbstantrieb verliehen werden soll, ein von Hand angetriebenes Fahrzeug mit einer Mehrzahl von Stützrädern ist, wobei mindestens einige dieser Räder ausgetauscht sind, sodass das Fahrzeug ausschließlich von mindestens zwei der mit Rädern versehenen Einheiten oder Fahrgestellen und frei drehenden Rädern oder Rollen getragen wird.

**41.** Verfahren nach einem der Ansprüche 35-40, wobei die zentrale elektronische Steuereinheit an dem Objekt angebracht ist.

**Revendications**

**1.** Dispositif de commande (30) pour commander manuellement des moyens d'entraînement et de direction (M1, M2) destinés à un objet ou à un véhicule motopropulsé à roues, ledit dispositif de commande comprenant
un élément de base (31),
un élément de commande (32) muni d'un moyen de préhension (33) et soutenu par l'élément de base de manière à pouvoir être déplacé sur celui-ci,
au moins un premier et un deuxième transducteur de force (34, 38), le premier transducteur de force (34) étant disposé pour recevoir une composante de force appliquée manuellement sur l'élément de commande dans une première direction (X) prédéterminée, uniquement,
chacun desdits au moins premier et deuxième transducteurs de force étant adaptés pour générer un signal de sortie vers les moyens d'entraînement et de direction, **caractérisé en ce que**
l'élément de commande (32) peut être déplacé sur l'élément de base le long d'au moins un plan,
le deuxième transducteur de force (38) est disposé pour recevoir une composante de force appliquée manuellement sur l'élément de commande dans une deuxième direction (Y) prédéterminée uniquement, transversalement à la première direction le long dudit plan, et
les signaux de sortie générés vers les moyens d'entraînement et de direction sont répondant à l'intensité des composantes de force reçues.

**2.** Dispositif de commande selon la revendication 1, dans lequel lesdites première et deuxième directions prédéterminées s'étendent en formant un angle droit l'une par rapport à l'autre.

**3.** Dispositif de commande selon la revendication 1 ou 2, dans lequel ladite première direction (X) prédéterminée s'étend dans la direction normale de déplacement du véhicule.

**4.** Dispositif de commande selon l'une quelconque des revendications 1 à 3, dans lequel ledit moyen de préhension comprend une paire de poignées (33) espacées l'une de l'autre, qui sont montées de manière fixe sur l'élément de commande (32) et disposées symétriquement par rapport à ladite première direction (X) prédéterminée, ledit premier transducteur de force (34) et un troisième transducteur de force similaire étant disposés symétriquement par rapport à ladite première direction (X) prédéterminée, ledit troisième transducteur de force étant disposé comme le premier transducteur de force pour recevoir une composante de force appliquée manuellement sur l'élément de commande dans ladite première direction prédéterminée uniquement.

**5.** Dispositif de commande selon l'une quelconque des revendications 1 à 4, dans lequel chaque transducteur de force (34, 38) est monté de manière fixe par rapport à l'élément de base (31), chaque transducteur de force possédant un élément transmetteur de force (36, 40) s'étendant et s'engageant dans les parois d'une cavité associée (37, 41) dans l'élément de commande (32), la forme de ladite cavité étant telle que seule une composante de force dans ladite direction prédéterminée peut être transmise de l'élément de commande vers le transducteur de force via ledit élément de transmission.

6. Dispositif de commande selon l'une quelconque des revendications 1 à 5, dans lequel les transducteurs de force comprennent des extensomètres.

7. Dispositif de commande selon la revendication 6, dans lequel chaque transducteur de force comprend une poutre cantilever (35, 39) sur laquelle sont montés des extensomètres, la composante de force de l'élément de commande étant appliquée sur l'extrémité libre de la poutre de manière à générer des efforts de flexion sur celle-ci.

8. Dispositif de commande selon l'une quelconque des revendications 1 à 7, dans lequel l'élément de commande flotte librement sur un film ou une couche liquide (42).

9. Dispositif de commande selon la revendication 8, dans lequel ledit film ou couche liquide est une couche d'huile ou de graisse visqueuse.

10. Dispositif de commande selon la revendication 9, dans lequel le film ou couche liquide est une couche de graisse d'amortissement.

11. Dispositif de commande selon l'une quelconque des revendications 1 à 10, comprenant également un circuit électronique (CCU) pour recevoir les signaux de sortie provenant des transducteurs de force et pour traiter ces signaux avant de les transmettre au système d'entraînement et de direction du véhicule, de manière à obtenir essentiellement le même mouvement du véhicule que si celui-ci avait été entraîné manuellement par les forces appliquées sur le moyen de préhension, mais à une échelle plus importante.

12. Méthode de commande manuelle de moyens d'entraînement et de direction (M2, M1) destinés à un objet ou à un véhicule motopropulsé à roues, ladite méthode comprenant
application d'une force manuelle sur un élément de commande (32),
décomposition de la force manuelle en au moins deux composantes s'étendant dans des directions prédéterminées se croisant mutuellement (x, y),
application de chacune desdites composantes de force à un transducteur respectif (34, 38), et
transmission au système de direction depuis chacun desdits transducteurs d'un signal de sortie, qui est répondant à l'intensité de la composante de force reçue par le transducteur dans la direction respective.

13. Méthode selon la revendication 12, dans laquelle la force manuelle est appliquée sur le moyen de préhension (33) situé sur l'élément de commande (32), qui est soutenu par un élément de base (31) de manière à pouvoir être déplacé librement sur celui-ci le long d'un plan dans lesdites directions prédéterminées uniquement.

14. Méthode selon la revendication 12 ou 13, dans laquelle lesdites directions prédéterminées s'étendent en formant un angle droit l'une par rapport à l'autre.

15. Méthode selon l'une quelconque des revendications 12 à 14, dans laquelle l'une (X) desdites directions prédéterminées s'étend dans la direction normale de déplacement du véhicule.

16. Méthode selon l'une quelconque des revendications 13 à 15, dans laquelle l'élément de commande (32) flotte librement sur un film ou une couche liquide (42).

17. Méthode selon la revendication 16, dans laquelle ledit film ou couche liquide est une couche d'huile ou de graisse visqueuse.

18. Méthode selon la revendication 17, dans laquelle le film ou couche liquide est une couche de graisse d'amortissement.

19. Méthode selon l'une quelconque des revendications 12 à 18, dans laquelle la rigidité des transducteurs et la masse de la plaque de contrôle sont combinées de manière à obtenir une fréquence naturelle de résonance des pièces mobiles du dispositif de commande dépassant substantiellement les fréquences des vibrations de l'environnement.

**20.** Méthode selon la revendication 18 ou 19, dans laquelle la couche liquide est disposée de manière à assurer un amortissement critique ou légèrement surcritique des vibrations de résonance libre naturelles.

**21.** Méthode selon l'une quelconque des revendications 12 à 20, dans laquelle les signaux de sortie provenant des transducteurs sont transmis un circuit électronique (CCU), dans lequel ces signaux sont traités avant d'être transmis à un système d'entraînement et de direction (M2, M1) d'un véhicule à roues, de manière à obtenir essentiellement le même mouvement du véhicule que si celui-ci avait été entraîné manuellement par la force appliquée sur l'élément de commande, mais à une échelle plus importante.

**22.** Système à roues motrices destiné à soutenir et à entraîner un objet, ledit système à roues comprenant:

au moins deux unités à roue ou bogies (2) séparés destinés à être montés en des points précis de l'objet pour soutenir celui-ci, chaque unité ou bogie comprenant un châssis, au moins un élément à roue monté de manière à pouvoir tourner par rapport au châssis, un moyen d'entraînement (M2) pour faire tourner le(s) élément(s) à roue par rapport au châssis, et un moyen de direction (M1) pour déplacer le(s) élément(s) à roue dans les directions souhaitées par rapport au châssis.
des moyens de contrôle électronique pour contrôler le fonctionnement des moyens d'entraînement et de direction desdits unités à roue ou bogies et comprenant
un dispositif de contrôle de bogie préprogrammé sur chacun desdits unités à roue ou bogies, un moyen de transmission de signaux et une unité de contrôle centrale préprogrammée (CCU) pour transmettre des signaux de commande à chacun des dispositifs de contrôle de bogie préprogrammés via le moyen de transmission de signaux en réponse à des signaux de commande d'entrée reçus, et
un dispositif de commande (30) selon l'une quelconque des revendications 1 à 11, les signaux de sortie générés par les transducteurs (34, 38) étant transmis aux moyens de contrôle électronique.

**23.** Système selon la revendication 22, dans lequel l'unité de contrôle centrale comprend un premier moyen de programmation pour entrer des informations relatives aux positions mutuelles des unités à roue ou bogies sur ledit objet.

**24.** Système selon la revendication 22 ou 23, dans lequel chaque dispositif de contrôle de bogie comprend un deuxième moyen de programmation pour entrer des informations relatives à l'orientation de l'unité à roue associée par rapport à un axe commun sélectionné quand elle est montée sur ledit objet.

**25.** Système selon l'une quelconque des revendications 22 à 24, dans lequel le moyen de transmission de signaux comprend un dispositif d'isolation galvanique.

**26.** Système selon la revendication 25, dans lequel le dispositif d'isolation galvanique comprend un optocoupleur.

**27.** Système selon l'une quelconque des revendications 22 à 26, dans lequel l'unité de contrôle centrale (CCU) comprend un moyen destiné à transformer en chaînes numériques en série les signaux de commande de sortie devant être transmis aux dispositifs de contrôle de bogie des unités à roue ou bogies.

**28.** Système selon l'une quelconque des revendications 22 à 27, dans lequel les composants électroniques des moyens de contrôle électronique sont répartis entre l'unité de contrôle centrale, d'une part, et chacun des dispositifs de contrôle de bogie, d'autre part, de manière à minimiser la transmission de données via le moyen de transmission de signaux.

**29.** Système selon l'une quelconque des revendications 22 à 28, dans lequel les moyens d'entraînement et de direction (M2, M1) des unités à roue ou bogies comprennent des moteurs choisis dans le groupe consistant en moteurs électriques, moteurs hydrauliques, moteurs pneumatiques, moteurs à vapeur, moteurs thermodynamiques et moteurs à combustion interne.

**30.** Système selon l'une quelconque des revendications 22 à 29, dans lequel les unités à roue ou bogies du système sont essentiellement identiques.

**31.** Système selon l'une quelconque des revendications 22 à 30, dans lequel chaque élément à roue est du type comprenant un élément de support (112), un élément à roue (111) et un arbre d'entraînement (124), l'arbre d'entraînement possédant un moyen d'entraînement (125) s'accouplant à une surface d'entraînement (126) sur l'élément à roue pour entraîner l'élément à roue de manière rotative par rapport à l'élément de support, l'arbre d'entraînement possédant un axe longitudinal (124a) et l'accouplement du moyen d'entraînement et de la surface d'entraînement définissant en coupe verticale une ligne d'accouplement (127) formant un angle aigu avec l'axe longitudinal, l'élément à roue possédant une portion en contact avec la surface (118) s'étendant au niveau de sa périphérie et positionnée de manière à ce que la ligne d'accouplement vienne la croiser essentiellement là où elle est en contact avec une surface de support (119).

**32.** Système selon la revendication 31, dans lequel l'arbre d'entraînement est essentiellement normal à la surface de support.

**33.** Système selon la revendication 31 ou 32, dans lequel la ligne d'accouplement forme un angle compris entre 10˚ et 25˚ avec l'axe longitudinal essentiellement normal de l'arbre d'entraînement.

**34.** Système selon l'une quelconque des revendications 31 à 33, dans lequel l'élément de support possède une surface externe essentiellement hémisphérique, l'élément à roue pouvant tourner autour d'un axe s'étendant normalement à une surface interne de l'élément hémisphérique.

**35.** Méthode permettant de rendre un objet autopropulseur au moyen d'un système à roues motrices selon l'une quelconque des revendications 24 à 34, ladite méthode comprenant:

montage d'au moins deux desdits unités à roue ou bogies (2) sur l'objet en des points sélectionnés de celui-ci et selon des orientations sélectionnées par rapport à une certaine direction,
programmation dudit premier moyen de programmation en entrant des informations relatives aux positions mutuelles des unités à roue ou bogies sur ledit objet,
programmation dudit deuxième moyen de programmation en entrant des informations relatives à l'orientation de l'unité à roue associée par rapport à une direction sélectionnée, et
entrée de signaux de commande dans l'unité de contrôle centrale au moyen du dispositif de commande de manière à déplacer le véhicule le long d'une trajectoire souhaitée.

**36.** Méthode selon la revendication 35, comprenant le fait de baser les informations relatives aux positions mutuelles des unités à roue ou bogies sur un système de coordonnées réelles ou imaginaires sur ledit objet.

**37.** Méthode selon la revendication 36, dans laquelle ladite direction sélectionnée est l'un des axes du système de coordonnées.

**38.** Méthode selon l'une quelconque des revendications 35 à 37, dans laquelle les moyens de contrôle électronique sont préprogrammés pour garantir que les moyens de direction déplacent tous les éléments à roue des unités à roue ou bogies montés sur ledit objet de manière à ce que, à tout moment pendant l'entraînement, tous les éléments à roue se déplacent le long de lignes essentiellement parallèles ou d'arcs de cercle essentiellement concentriques.

**39.** Méthode selon l'une quelconque des revendications 35 à 38, dans laquelle les signaux de commande sont transmis par l'unité de contrôle centrale aux dispositifs de contrôle de bogie des unités à roue ou bogies sous forme de chaînes numériques en série.

**40.** Méthode selon l'une quelconque des revendications 35 à 39, dans laquelle l'objet devant être rendu autopropulseur est un véhicule à conduite manuelle possédant plusieurs roues de support, au moins une partie de ces roues étant remplacées de manière à ce que le véhicule soit supporté par au moins deux desdits unités à roue ou bogies et par des roues ou roulettes pivotant librement uniquement.

**41.** Méthode selon l'une quelconque des revendications 35 à 40, dans laquelle l'unité de contrôle électronique centrale est montée sur l'objet.

Fig. 1

Fig. 2

# Fig. 3

# Fig. 5

# Fig. 4

EP 1 706 306 B1

**Fig. 6**

**Fig. 7**

27

# Fig. 8

# Fig. 9

**Fig. 10**

**Fig. 11**

**Fig. 12**

EP 1 706 306 B1

# Fig. 13

31

# Fig. 14

$$u = \sqrt{Jx^2 + Jy^2}$$
$$\cos \varphi = Jx/u$$
$$\sin \varphi = Jy/u$$

$Jx = u \cos\varphi$

$u$

$\varphi$

$\omega = \dot{\theta}$

$Jy = u \sin\varphi$

Cy

$u/\dot{\theta} = \omega$

Cx

C
(Cx, Cy)

$$Cx = -\frac{u}{\dot{\theta}} \sin \varphi = Jy/\dot{\theta}$$
$$Cy = \frac{u}{\dot{\theta}} \cos \varphi = Jx/\dot{\theta}$$
$\Bigg\}$ CENTRE OF ROTATION

# Fig. 15

# Fig. 16

MOVE COMMANDS TO EACH BOGIE

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6474434 B
- DK 0300623 W
- DE 19625500 A1
- US 6276471 A